(19) Europäisches Patentamt
European Patent Office
Office européen des brevets

(11) **EP 3 384 256 B1**

(12) **FASCICULE DE BREVET EUROPEEN**

(45) Date de publication et mention
de la délivrance du brevet:
**22.02.2023 Bulletin 2023/08**

(21) Numéro de dépôt: **16802045.1**

(22) Date de dépôt: **28.11.2016**

(51) Classification Internationale des Brevets (IPC):
**G01J 5/10** *(2006.01)*     **G01J 5/34** *(2006.01)*
**G06K 9/00** *(2006.01)*

(52) Classification Coopérative des Brevets (CPC):
**G01J 5/10; G01J 5/34; G06V 40/1306**

(86) Numéro de dépôt international:
**PCT/EP2016/078985**

(87) Numéro de publication internationale:
**WO 2017/093176 (08.06.2017 Gazette 2017/23)**

(54) **PROCEDE DE CAPTURE DE MOTIF THERMIQUE**

VERFAHREN ZUR ERFASSUNG EINES WÄRMEMUSTERS

METHOD FOR CAPTURING A HEAT PATTERN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2015 FR 1561577**

(43) Date de publication de la demande:
**10.10.2018 Bulletin 2018/41**

(73) Titulaires:
• **Commissariat à l'Énergie Atomique
et aux Énergies Alternatives
75015 Paris (FR)**
• **Idemia Identity & Security France
92400 Courbevoie (FR)**

(72) Inventeurs:
• **MAINGUET, Jean-François
38100 Grenoble (FR)**
• **FOURRE, Joël, Yann
77550 Moissy-Cramayel (FR)**

(74) Mandataire: **Brevalex
Tour Trinity
1 Bis Esplanade de La Défense
CS 60347
92035 Paris La Défense Cedex (FR)**

(56) Documents cités:
**EP-A1- 2 385 486        US-A- 6 091 837
US-A1- 2009 206 851**

**Description**

## DOMAINE TECHNIQUE ET ART ANTÉRIEUR

L'invention se rapporte à un procédé de capture de motif thermique au cours duquel plusieurs mesures du motif thermique sont réalisées au niveau de chaque pixel du capteur avec lequel le procédé est mis en oeuvre. Ce procédé est avantageusement mis en oeuvre pour réaliser une capture d'empreinte digitale par détection thermique.

Il est connu de réaliser un capteur d'empreinte digitale comportant des moyens de détection thermique. Ces moyens de détection thermique peuvent correspondre à des éléments pyroélectriques, des diodes, des thermistances ou tout autre élément thermosensible permettant la conversion d'une variation de température en une variation d'un autre paramètre de l'élément sensible tel qu'un potentiel électrique aux bornes de l'élément thermosensible, un courant électrique généré par l'élément thermosensible ou encore une variation de la résistance électrique de l'élément thermosensible.

La détection d'empreinte digitale peut être réalisée par des capteurs dits « passifs » exploitant une différence de températures entre le doigt et le capteur, comme décrit dans les documents US 4 394 773, US 4 429 413 et US 6 289 114. Ces capteurs ont toutefois pour inconvénient de réaliser une mesure qui dépend uniquement de la différence de températures entre le doigt et le capteur. Il peut donc arriver que le niveau du signal obtenu soit nul lorsque le doigt et le capteur sont à la même température, ou que le contraste des images capturées varie, ce qui pose alors des problèmes lors du traitement ultérieur des images capturées.

Pour éliminer ces problèmes posés par les capteurs thermiques passifs, et également pour pouvoir réaliser une acquisition statique où le doigt ne bouge pas, des capteurs dits « actifs » ont été proposés, comme par exemple celui décrit dans les documents US 6 091 837 et EP 2 385 486 A1. Dans un tel capteur actif, chaque pixel comporte une capacité pyroélectrique formée de deux électrodes conductrices entre lesquelles une portion de matériau pyroélectrique est disposée, et un élément chauffant.

Cet élément chauffant dissipe une certaine quantité de chaleur dans le pixel (notamment dans la portion de matériau pyroélectrique), et l'échauffement du pixel est mesuré au bout d'un certain temps d'acquisition en présence du doigt sur le capteur.

Cela permet de distinguer, au niveau de chaque pixel, la présence d'une crête ou d'une vallée de l'empreinte mesurée suivant que la chaleur est absorbée par la peau (pixel en présence d'une crête de l'empreinte) ou conservée dans le pixel (pixel en présence d'une vallée de l'empreinte). Cela conduit à une température finale plus faible dans le cas d'un pixel en présence d'une crête où la chaleur est absorbée par la peau, contrairement à un pixel en présence d'une vallée où la chaleur n'est pas absorbée par la peau et reste au niveau du pixel.

Au premier ordre, un tel capteur permet de mesurer la capacité calorifique, également appelée chaleur massique ou capacité thermique massique, d'un élément (le doigt lors d'une capture d'empreinte digitale) en contact avec le capteur. Les mesures obtenues dépendent également de la conductivité thermique entre le capteur et la partie de l'élément (crête ou vallée dans le cas d'une empreinte digitale) en présence.

Les éléments chauffants utilisent généralement l'effet Joule en dissipant de la chaleur depuis un élément résistif qui est parcouru par un courant. Un des niveaux de l'empilement technologique formant les pixels est avantageusement utilisé pour former ces éléments chauffants. Par exemple, il possible d'utiliser un des niveaux conducteurs servant à réaliser les transistors et les interconnexions du capteur si l'un de ces niveaux comporte un matériau conducteur présentant une résistivité adéquate et sur lequel il suffit d'appliquer une des tensions déjà disponibles dans le capteur, par exemple la tension d'alimentation du capteur, pour générer un chauffage par effet Joule. Cela est notamment utilisé lorsque le capteur comporte des transistors de type TFT (« Thin-Film Transistor », ou transistor en couches minces) réalisés sur un substrat de verre.

Les pixels d'un tel capteur sont disposés en formant une matrice de plusieurs lignes et de plusieurs colonnes. La lecture des pixels est généralement réalisée ligne par ligne. Les éléments chauffants peuvent alors être également commandés ligne par ligne à l'aide d'un transistor en tête de chaque ligne, ce qui permet de ne pas avoir à rajouter de transistors de commande dans les pixels servant uniquement à commander le chauffage des pixels. Chaque ligne d'éléments chauffants est par exemple connectée, d'un côté de la matrice de pixels, à la masse, et de l'autre coté à un transistor de commande relié à une alimentation adaptée de manière à maîtriser le courant parcourant les éléments chauffants et donc la puissance thermique injectée par effet Joule dans les pixels par ces éléments chauffants.

Lors d'une lecture classique d'un motif thermique par un capteur à détection thermique actif, tous les pixels du capteur sont lus de la même manière et de manière régulière à la même cadence, c'est-à-dire avec un temps d'attente fixe identique pour tous les pixels. Ce temps d'attente, qui correspond à une durée pendant laquelle un pixel réalise la mesure du motif thermique, est généralement ajusté de manière à obtenir un contraste maximal entre les crêtes et les creux de l'empreinte digitale, c'est-à-dire suffisamment long pour obtenir un niveau de signal important par rapport au bruit. Ce temps d'attente doit toutefois ne pas être trop long pour que la durée de la mesure reste acceptable par l'utilisateur et que la mesure ne soit pas perturbée par de possibles mouvements du doigt sur la surface du capteur.

Un compromis doit être trouvé car un temps d'attente long a pour avantage d'augmenter le contraste de l'image obtenue, mais implique par contre une diathermie plus importante, c'est-à-dire une plus grande dispersion de la chaleur entre les pixels voisins, engendrant un certain flou dans l'image obtenue. Un temps d'attente plus court permet de réduire cette diathermie, mais avec en contrepartie un contraste plus faible dans l'image obtenue et certains éléments parasites, tels que des résidus ou des gouttelettes d'eau ou de graisse, assimilés à des parties de l'élément dont le motif thermique est capturé, par exemple assimilés à des crêtes d'une empreinte digitale.

Il a été observé que les caractéristiques thermiques de la peau varient suivant son taux d'hydratation. Par exemple, le rapport entre la conductivité thermique (en W/m/K) d'une peau ayant un taux d'hydratation égal à environ 100 % et celle d'une peau ayant un taux d'hydratation égal à environ 0 % est égal à environ 10. Plus la peau est sèche, moins elle conduit la chaleur. Toutefois, une peau sèche conduit bien mieux la chaleur que l'air. De plus, en considérant l'effusivité thermique (qui correspond à la conductivité thermique multipliée par la chaleur volumique, et qui caractérise la capacité à échanger l'énergie thermique) et la diffusivité thermique (qui correspond à la conductivité thermique divisée par la chaleur volumique, et qui caractérise la vitesse avec laquelle un élément diffuse la chaleur en son sein) de l'air, de l'eau, ainsi que de la peau avec différents taux d'hydratation, plusieurs observations peuvent être faites :

- l'air diffuse rapidement la chaleur en son sein, mais la communique très mal à un autre élément en contact avec l'air ;
- l'eau diffuse la chaleur 100 fois moins rapidement que l'air en soin sein, mais échange par contre 300 fois plus vite que l'air la chaleur avec un autre élément en contact avec l'eau ;
- une peau totalement déshydratée diffuse 5 fois moins bien la chaleur en son sein que l'eau ou qu'une peau hydratée à 100 %, et échange aussi 5 fois moins bien la chaleur avec un autre élément en contact avec celle-ci que l'eau ou qu'une peau hydratée à 100 %.

Les variations du taux d'humidité de l'élément dont le motif thermique est mesuré, par exemple le taux d'hydratation de la peau dont l'empreinte digitale est capturée, ont donc une influence sur l'image du motif thermique capturé.

De plus, aucun des capteurs de l'art antérieur n'exploite ces informations supplémentaires liées au taux d'hydratation de la peau présente sur le capteur lors d'une capture d'empreinte digitale, ou plus généralement les informations liées au taux d'humidité du ou des éléments présents sur le capteur lors d'une mesure du motif thermique de cet ou ces éléments, afin d'améliorer la qualité de la capture du motif thermique.

## EXPOSÉ DE L'INVENTION

Un but de la présente invention est de proposer un procédé de capture de motif thermique permettant d'améliorer la qualité de la capture du motif thermique et d'exploiter des informations liées au taux d'humidité d'un élément dont le motif thermique est mesuré, par exemple les informations liées au taux d'hydratation de la peau lors d'une capture d'empreinte digitale.

Pour cela, l'invention propose un procédé de capture d'un motif thermique selon la revendication 1.

Le procédé selon l'invention propose de lire, au niveau de chacun des pixels, un motif thermique, par exemple celui d'une empreinte digitale, avec des temps d'attente différents et/ou des puissances de chauffage différentes, afin d'obtenir des informations thermiques différentes via ces mesures qui peuvent être vues comme des mesures thermiques réalisées à différentes profondeurs dans le ou les éléments présents sur le capteur du fait de la propagation de la chaleur qui diffère selon la valeur du temps d'attente et/ou la valeur de la puissance dissipée.

En réalisant par exemple un premier chauffage tel qu'il dissipe une faible première puissance de chauffage et/ou une première mesure du motif thermique avec un premier temps d'attente court, on obtient une première image formée d'informations dites de « surface », c'est-à-dire qui correspondent à la mesure du motif thermique à une faible profondeur du ou des éléments. Cela provient du fait qu'en réalisant un chauffage dissipant une faible puissance et/ou en réalisant une mesure du motif thermique avec un temps d'attente court, la chaleur engendrée par le chauffage n'a pas le temps de se propager dans une profondeur importante du ou des éléments dont le motif thermique est mesuré. La deuxième image réalisée avec un deuxième chauffage dissipant une plus forte puissance et/ou avec une deuxième mesure du motif thermique avec un temps d'attente plus important comporte par contre des informations qui concernent une partie plus en profondeur du ou des éléments présents sur le capteur. Cette deuxième mesure permet par exemple de lire le motif thermique du ou des éléments présents derrière des résidus se trouvant sur le capteur. Par contre, cette deuxième mesure révèle dans ce cas, pour une profondeur donnée, moins de détails sur les éléments présents sur le capteur du fait que la diathermie lors de cette deuxième mesure est plus importante que celle se produisant lors de la première mesure en raison de la plus forte puissance dissipée et/ou du temps d'attente plus long.

A partir de ces deux images, il est donc possible d'améliorer la qualité de la capture réalisée du fait que les informations contenues dans ces images peuvent être combinées pour ne conserver que les informations pertinentes de chacune des images. Ce procédé est particulièrement avantageux lorsqu'il est mis en oeuvre avec un capteur thermique d'empreinte digitale afin de capturer à la fois les détails fins des doigts (obtenus en utilisant un temps d'attente court et/ou une faible puissance dissipée) et les autres caractéristiques de l'empreinte plus en profondeur (obtenues en utilisant un temps d'attente long et/ou une forte puissance dissipée), tout en éliminant de l'image finale les éventuelles traces de résidus présents sur le capteur.

En outre, en suivant l'évolution de la température d'une image à l'autre, il est possible d'en déduire des informations relatives au taux d'humidité du ou des éléments présents sur le capteur et dont le motif thermique est mesuré, par exemple le taux d'hydratation de la peau dont l'empreinte digitale est capturée.

Le temps d'attente est défini comme étant la durée entre l'instant auquel la mesure par un pixel est initiée, par exemple l'instant auquel un pixel commence à accumuler des charges générées par la mesure, et l'instant de lecture de ce pixel, par exemple l'instant auquel les charges accumulées dans le pixel durant le temps d'attente sont envoyées dans un circuit de lecture.

L'expression « apte à chauffer l'élément de mesure thermosensible dudit pixel lors d'une mesure du motif thermique par l'élément de mesure thermosensible dudit pixel » signifie que le chauffage obtenu est suffisamment important pour qu'à la fin d'un certain temps de mesure (le temps d'attente), la mesure obtenue, c'est-à-dire la variation du paramètre variable avec la température de l'élément de mesure thermosensible, correspondant à la différence de températures mesurée, soit significative pour détecter le motif thermique. Le chauffage obtenu peut être tel qu'une variation de températures d'au moins 0,5 K, par exemple environ 1 K, de l'élément de mesure thermosensible entre un pixel en contact avec de la peau et un pixel qui n'est pas en contact avec de la peau peut être obtenue lorsque le motif thermique mesuré correspond à une empreinte digitale. Le choix de la valeur de cette variation de température dépend notamment de la sensibilité de l'élément de mesure thermosensible, de la taille du pixel et du bruit du circuit de lecture du capteur.

L'expression « motif thermique » désigne une répartition spatiale des caractéristiques thermiques d'un objet qui est détectable par le capteur, par exemple le motif d'une empreinte digitale.

La valeur du premier temps d'attente peut être inférieure à celle du deuxième temps d'attente, et/ou la valeur de la première puissance peut être inférieure à celle de la deuxième puissance.

Un rapport entre les premier et deuxième temps d'attente peut être compris entre environ 2 et 10 (avec par exemple un premiertemps d'attente égal à environ 100 $\mu$s et un deuxième temps d'attente égal à environ 1 ms), et/ou un rapport entre les première et deuxième puissances de chauffage peut être supérieur ou égal à 10 (avec par exemple une première puissance de chauffage égale à environ 1 mW et une deuxième puissance de chauffage égale à environ 10 mW).

Les premier et deuxième chauffages de l'élément de mesure thermosensible du pixel peuvent être mis en oeuvre sous la forme d'une phase de chauffage continue à puissance constante.

Le procédé selon l'invention comporte en outre, après la deuxième mesure du motif thermique présent sur chacun des pixels, une étape de traitement numérique de première et deuxième images du motif thermique, correspondant respectivement à l'ensemble des premières mesures du motif thermique et à l'ensemble des deuxièmes mesures du motif thermique, comprenant au moins une comparaison et/ou au moins une combinaison linéaire des première et deuxième images. Ainsi, il est possible de déterminer l'évolution de la température au niveau de chacun des pixels entre les première et deuxième mesures du motif thermique, ce qui permet notamment d'identifier la présence de résidus et/ou de gouttelettes d'eau ou de graisse sur certains pixels, les différents taux d'humidité ou d'hydratation de l'élément présent sur le capteur et, dans le cas d'une capture d'une empreinte digitale, la présence d'air ou de peau sur chaque pixel, c'est-à-dire la présence d'une crête ou d'une vallée de l'empreinte digitale sur chaque pixel.

Cette étape de traitement peut former une nouvelle image à partir des première et deuxième images du motif thermique, cette nouvelle image pouvant être représentative de la comparaison et/ou de la combinaison linéaire des première et deuxième images.

Dans ce cas, le procédé peut comporter en outre, entre la deuxième mesure du motif thermique présent sur chacun des pixels et l'étape de traitement numérique des première et deuxième images du motif thermique, une étape de déconvolution de la deuxième image. Une telle déconvolution, réalisée par traitement numérique, permet de corriger les effets de diathermie présents dans la deuxième image afin de la rendre similaire à la première image en termes de précision des détails du motif thermique capturé.

Le procédé selon l'invention comporte en outre, après l'étape de traitement numérique des première et deuxième images du motif thermique, une étape d'identification de crêtes et de vallées d'une empreinte digitale à partir des données issues de l'étape de traitement numérique des première et deuxième images du motif thermique.

Le procédé selon l'invention comporte en outre, après l'étape d'identification des crêtes et des vallées de l'empreinte digitale :

- une étape de calcul d'un taux d'hydratation de la peau dont le motif thermique a été mesuré, à partir d'un abaque ou d'une fonction exprimant le taux d'hydratation en fonction du résultat obtenu lors d'une mesure du motif thermique pour un pixel sur lequel une crête a été identifiée, ou
- une étape de calcul d'une différence de mesures entre celle obtenue lors de la deuxième mesure du motif thermique pour un premier pixel sur lequel une crête a été identifiée et celle obtenue lors de la deuxième mesure du motif thermique pour un deuxième pixel sur lequel une vallée a été identifiée, puis une étape de calcul d'un taux d'hydratation de la peau dont le motif thermique a été mesuré, à partir d'un abaque ou d'une fonction exprimant le taux d'hydratation en fonction de la différence de mesures entre une crête et une vallée d'une empreinte digitale.

Le taux d'hydratation obtenu peut servir à distinguer certains types de faux doigts, par exemple en silicone ou en gélatine, dont les caractéristiques thermiques sont suffisamment éloignées de celles d'un vrai doigt.

Le procédé peut être tel que :

- chaque élément de mesure thermosensible comporte au moins une capacité pyroélectrique formée par au moins une portion de matériau pyroélectrique disposée entre des première et deuxième électrodes ;
- l'élément chauffant est apte à émettre un rayonnement chauffer par effet Joule la portion de matériau pyroélectrique de la capacité pyroélectrique dudit pixel ;
- le premier chauffage de l'élément de mesure thermosensible d'un pixel comprend une application d'une première tension de chauffage aux bornes de l'élément chauffant, dissipant la première puissance de chauffage par effet Joule dans la portion de matériau pyroélectrique de la capacité pyroélectrique du pixel ;
- la première mesure du motif thermique présent sur un pixel comprend une lecture des charges générées par le pixel pendant le premier temps d'attente ;
- le deuxième chauffage de l'élément de mesure thermosensible d'un pixel comprend une application d'une deuxième tension de chauffage aux bornes de l'élément chauffant, dissipant la deuxième puissance de chauffage par effet Joule dans la portion de matériau pyroélectrique de la capacité pyroélectrique du pixel ;
- la deuxième mesure du motif thermique présent sur le pixel comprend une lecture des charges générées par le pixel pendant le deuxième temps d'attente.

En variante, le procédé peut être tel que :

- chaque élément de mesure thermosensible comporte au moins une capacité pyroélectrique formée par au moins une portion de matériau pyroélectrique disposée entre des première et deuxième électrodes, et
- l'élément chauffant est apte à émettre un rayonnement lumineux destiné à chauffer les portions de matériau pyroélectrique des capacités pyroélectriques des pixels.

Le rayonnement lumineux émis par l'élément chauffant peut être orienté sur une couche de protection des pixels et/ou l'une des premières et deuxièmes électrodes des pixels.

Ce chauffage par rayonnement lumineux des portions de matériau pyroélectrique peut se faire directement en illuminant les portions de matériau pyroélectrique, ou indirectement en chauffant d'autres éléments que les portions de matériau pyroélectrique, par exemple les électrodes de la capacité pyroélectrique ou une couche de protection surfacique de ces capacités pyroélectriques ou encore une couche spécifique dédiée à ce chauffage par rayonnement lumineux, ces autres éléments transmettant la chaleur par conduction aux portions de matériau pyroélectrique.

De manière générale, d'autres types de capteur et/ou d'autres types de moyens de chauffage que ceux précédemment décrits peuvent être utilisés pour la mise en oeuvre du procédé de l'invention. Par exemple, les éléments de mesure thermosensibles du capteur peuvent être des thermistances.

Les deux chauffages des éléments de mesure thermosensible des pixels du capteur peuvent être mis en oeuvre de manière espacée l'un de l'autre, avec un temps d'attente entre les deux chauffages. En variante, il est possible que les deux chauffages soient mis en oeuvre sous la forme d'une phase de chauffage continue des pixels, avec dans ce cas un deuxième temps d'attente supérieur au premier temps d'attente, ces deux temps d'attente démarrant au même moment.

Dans les modes de réalisation précédemment décrits, seuls deux chauffages et deux temps d'attente sont décrits. De manière générale, le procédé peut comporter n chauffages mis en oeuvre avec n puissances de chauffage, et n mesures du motif thermique réalisées avec n temps d'attente, n étant un entier supérieur ou égal à 2. En permettant de choisir le nombre de mesures du motif thermique réalisées à des profondeurs différentes, il est possible de caractériser la structure fine de chaque couche de matière posée sur le capteur.

Le capteur peut comporter en outre des éléments de détection optique ou capacitive entrelacés avec les pixels comprenant les éléments de mesure thermosensible.

Un délai non nul peut séparer le début du premier chauffage et le début du premier temps d'attente, et le procédé peut comporter en outre la mise en oeuvre d'une mesure préliminaire du motif thermique présent sur les pixels via une lecture du paramètre variable avec la température des éléments de mesure thermosensible des pixels à la fin dudit délai, puis une estimation des disparités entre les pixels du capteur à partir de la mesure préliminaire du motif thermique.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente une vue en coupe d'une capacité pyroélectrique d'un pixel d'un capteur pouvant être utilisé pour la mise en oeuvre d'un procédé de capture d'un motif thermique, objet de la présente invention ;
- la figure 2 représente une vue de dessus d'une partie d'un capteur pouvant être utilisé pour la mise en oeuvre d'un procédé de capture d'un motif thermique, objet de la présente invention ;
- la figure 3 représente un premier exemple de réalisation d'un circuit de lecture d'un pixel d'un capteur utilisé pour la mise en oeuvre d'un procédé de capture d'un motif thermique, objet de la présente invention ;
- la figure 4 représente les premières étapes d'un procédé de capture d'un motif thermique, objet de la présente invention, selon un mode de réalisation particulier ;
- la figure 5 représente un deuxième exemple de réalisation d'un circuit de lecture d'un pixel d'un capteur utilisé pour la mise en oeuvre d'un procédé de capture d'un motif thermique, objet de la présente invention ;
- la figure 6 représente une vue de dessus d'une partie d'un capteur comportant une matrice de pixels de détection optique entrelacée avec des pixels de détection thermique selon un premier exemple de réalisation ;
- la figure 7 représente une vue de dessus d'une partie d'un capteur comportant une matrice de pixels de détection optique entrelacée avec des pixels de détection thermique selon un deuxième exemple de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

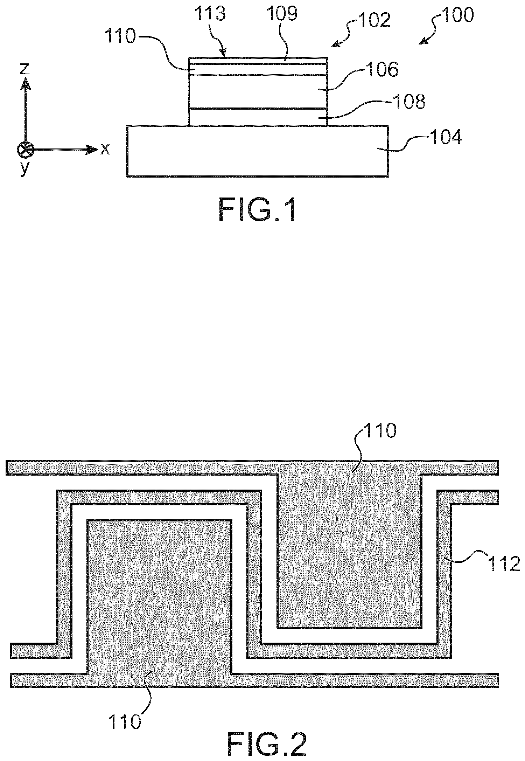

On se réfère tout d'abord à la figure 1 qui représente une vue en coupe d'une capacité pyroélectrique d'un pixel 102, qui forme l'élément de détection thermique, ou l'élément de mesure thermosensible, du pixel 102 d'un capteur 100 de motif thermique. Ce capteur 100 correspond à un exemple de capteur pouvant être utilisé pour la mise en oeuvre d'un procédé de capture d'un motif thermique à plusieurs mesures pour chaque pixel du capteur tel que décrit plus loin.

Le capteur 100 comporte un substrat 104 correspondant par exemple à un substrat de verre ou un substrat de semi-conducteur (par exemple du silicium). Un substrat 104 en verre peut être utilisé lorsque le capteur 100 est réalisé avec des transistors TFT, tandis qu'un substrat 104 en semi-conducteur, par exemple en silicium, peut être utilisé lorsque le capteur 100 comporte des transistors réalisés en technologie MOS. Le substrat 104 peut également être un substrat souple, par exemple à base de polyimide ou de PEN (polyéthylène naphtalate) ou de PET (polyéthylène téréphtalate), sur lequel les éléments électroniques du capteur 100 sont réalisés par technologie électronique imprimée (par exemple via une réalisation avec des têtes d'écriture de type jet d'encre) ou par lithographie.

Les pixels 102 du capteur 100 sont disposés en formant une matrice de plusieurs lignes et plusieurs colonnes de pixels 102. Le pas des pixels 102, dans le plan (X,Y) (c'est-à-dire le plan du substrat 104), est par exemple compris entre environ 25 $\mu$m et 100 $\mu$m. Dans le cas d'un capteur 100 standard de résolution égale à 500 dpi (« dot per inch »), le pas des pixels 102 est égal à 50,8 $\mu$m.

Chacun des pixels 102 du capteur 100 comporte des moyens de mesure thermosensible, ou de détection thermique, formés ici par une capacité pyroélectrique. Chaque capacité pyroélectrique comporte une portion 106 de matériau pyroélectrique disposée entre une électrode inférieure 108 et une électrode supérieure 110. Le matériau pyroélectrique de la portion 106 est avantageusement du polyfluorure de vinylidène ou PVDF, ou du polyfluorure de vinylidène-trifluoroéthylène ou P(VDF-TrFE) . En variante, le matériau pyroélectrique de la portion 106 peut être de l'AlN ou du PZT, ou tout autre matériau pyroélectrique adapté pour former une capacité pyroélectrique. L'épaisseur de la portion 106 est par exemple comprise entre environ 500 nm et 10 $\mu$m.

Les électrodes 108, 110 comportent chacune au moins un matériau électriquement conducteur, par exemple un matériau métallique tel que du titane d'épaisseur égale à environ 0,2 $\mu$m, et/ou du molybdène et/ou de l'aluminium et/ou un oxyde conducteur tel que de l'ITO (oxyde d'indium et d'étain) et/ou un polymère conducteur. L'une des électrodes 108, 110, avantageusement l'électrode supérieure 110, ou chacune des deux électrodes 108,110, peut être formée par un empilement de plusieurs matériaux électriquement conducteurs, par exemple un empilement Ti / TiN / AlCu. L'épaisseur de chacune des électrodes 108, 110 est par exemple comprise entre environ 0,1 $\mu$m et 1 $\mu$m.

Une couche de protection 109, correspondant par exemple à une couche d'AlN ou de tout autre matériau adapté à la réalisation de cette couche, recouvre l'électrode supérieure 110. L'épaisseur de la couche de protection 109 peut être comprise entre quelques microns et environ 100 µm. Une face supérieure 113 de la couche de protection 109 correspond à la surface au-dessus de laquelle se trouve le motif thermique destiné à être détecté, par exemple un doigt dont l'empreinte est destinée à être détectée.

Pour que le PVDF de la portion 106 acquière ses propriétés pyroélectriques (et aussi piézoélectriques), ce matériau est soumis, une fois pour toute la durée de vie de la capacité pyroélectrique, à un champ électrique d'environ 100 volts par micron d'épaisseur de PVDF. Les molécules à l'intérieur du PVDF s'orientent, et restent orientées ainsi, même lorsque le PVDF n'est plus soumis à ce champ électrique. Le PVDF peut être ainsi polarisé en appliquant une tension de polarisation initiale aux bornes des électrodes 108, 110.

Après cette polarisation initiale, lorsque la portion 106 est soumise à une variation de température $\Delta T$, cette variation de température $\Delta T$ provoque l'apparition d'un champ électrique supplémentaire générant des charges $\Delta Q$ entre les électrodes 108, 110 telles que :

$$\Delta Q = S.\gamma.\Delta T \ .$$

Le paramètre S correspond à la surface de la portion 106 en regard avec chacune des électrodes 108, 110. Le paramètre y correspond au coefficient pyroélectrique du matériau pyroélectrique de la portion 106. Par exemple, le coefficient pyroélectrique y du PVFD est égal à environ 29 µC/m²/K.

La portion 106 et les électrodes 108, 110 formant une capacité de valeur C à laquelle s'ajoutent des capacités parasites Cp, et les charges $\Delta Q$ générées dans cette capacité induisent une différence de potentiels électriques $\Delta V$ entre les électrodes 108,110 telle que :

$$\left( C + C_p \right)\!\Delta V = \Delta Q = S.\gamma.\Delta T \ .$$

Toutefois, en plus des charges générées par la capacité de valeur C, d'autres charges sont également générées via les capacités parasites Cp présentes, par exemple celles liées à la grille du transistor de lecture dans le cas d'un circuit de lecture en tension.

Lorsque le potentiel sur l'électrode de lecture (formée par l'une des électrodes 108, 110) est fixe (lecture dite « en courant »), les charges générées s'écoulent vers le circuit de lecture en formant un courant intégré en sortie, avec dans ce cas :

$$\frac{\Delta Q}{\zeta} = \frac{S.\gamma.\Delta T}{\zeta} \ .$$

avec $\zeta$ correspondant au temps d'attente pendant lequel la mesure est réalisée par le pixel. Une telle lecture en courant a pour avantage d'être insensible, au premier ordre, à la valeur des capacités, en particulier des capacités parasites.

Le signe de la tension électrique $\Delta V$ obtenue entre les électrodes 108, 110, ou le sens du courant dans le cas d'une lecture en courant, dépend du sens du champ électrique avec lequel le PVDF de la portion 106 a été initialement polarisé. Dans le cas de certains autres matériaux pyroélectriques tels que le nitrure d'aluminium, ce sens de polarisation initiale dépend de la manière avec laquelle le matériau pyroélectrique a été déposé, de son ordre et de son orientation cristallographique. En outre, la tension électrique $\Delta V$ obtenue, ou le sens du courant, peut être positive ou négative suivant que la variation de température subie par la capacité pyroélectrique soit positive ou négative.

Le capteur 100 comporte également des éléments chauffants dissipant une certaine quantité de chaleur dans les pixels 102, et notamment dans la portion 106 de matériau pyroélectrique. Dans le capteur 100 décrit ici, ces éléments chauffants sont des éléments conducteurs rapportés à côté des capacités pyroélectriques, formés avantageusement à partir de l'une des couches conductrices servant à la réalisation de l'une des électrodes 108, 110 des capacités pyroélectriques. La figure 2 représente schématiquement une telle configuration, dans laquelle un même niveau métallique, ici le niveau métallique supérieur, sert à la réalisation des électrodes supérieures 110 et d'un élément conducteur 112 réalisé sous la forme d'un serpentin entourant partiellement les électrodes supérieures 110 et permettant de chauffer latéralement les capacités pyroélectriques formées entre les électrodes supérieures 110 et les électrodes inférieures 108.

Le chauffage de la portion 106 de matériau pyroélectrique est obtenu en faisant circuler un courant dans l'élément conducteur 112 formant l'élément chauffant. L'intensité du chauffage obtenu dépend notamment de l'intensité du courant parcourant l'élément conducteur 112.

La valeur de la tension de chauffage appliquée sur l'élément conducteur 112, et donc la valeur du courant circulant dans l'élément conducteur 112, est ajustée par rapport à la résistivité du matériau conducteur utilisé afin de produire l'énergie thermique désirée dans les pixels 102. La puissance dissipée par pixel 102 peut avantageusement être comprise entre environ 0,1 mW et 1 mW.

Différentes variantes de réalisation du capteur 100 peuvent être envisagées. Ainsi, la géométrie de l'élément conducteur 112 peut être différente de celle décrite précédemment en liaison avec la figure 2. Il est possible que les éléments chauffants des pixels soient formés par une ou plusieurs portions conductrices distinctes pouvant se trouver au même niveau ou non que l'une des électrodes.

De plus, des éléments chauffants autres que des éléments résistifs peuvent être utilisés, comme par exemple des éléments de chauffage optique. Par exemple, une ou plusieurs LED, des diodes laser, peuvent émettre un rayonnement qui est transmis par le substrat 104 et absorbé par le matériau pyroélectrique des portions 106 des pixels 102, et/ou par l'une des électrodes 108, 110 des pixels 102, et/ou par une couche d'absorption spécifique, par exemple composée d'ITO partiellement oxydé, de carbone, de chrome oxydé, ou encore d'un polymère chargé de pigment coloré, ajoutée à proximité de l'une des électrodes ou directement sur l'une des électrodes. Par exemple, dans le cas d'un chauffage par rayonnement infrarouge, des électrodes en titane et/ou en ITO peuvent être avantageusement utilisées pour absorber ce rayonnement. De manière avantageuse, le rayonnement peut être absorbé par la couche de protection 109. Par exemple, la longueur d'onde du rayonnement optique pourra être comprise entre environ 450 nm et 1000 nm et la couche de protection 109 peut comporter du DLC (« Diamond-Like Carbon »), une résine chargée de pigment ou tout autre matériau permettant une absorption importante du rayonnement optique utilisé. Un tel chauffage optique réalise dans ce cas le chauffage d'une région du capteur 100 ou de l'ensemble du capteur 100. Un tel chauffage par rayonnement optique est avantageusement mis en oeuvre dans le cas de capteurs de faibles dimensions, en particulier les capteurs à balayage.

L'utilisation d'un chauffage optique permet d'éviter les perturbations électroniques du chauffage (et donc de pouvoir le moduler pendant le temps d'attente) et/ou d'avoir accès à des chauffages en mode « flash », c'est-à-dire un chauffage par un rayonnement de très courte durée.

Enfin, il est également possible que les éléments de mesure thermosensibles du capteur ne correspondent pas à des capacités pyroélectriques, mais correspondent par exemple à des thermistances, des diodes, ou tout autre élément thermosensible adapté.

Outre les capacités pyroélectriques des pixels 102, le capteur 100 comporte également des éléments électroniques permettant de lire les charges électriques générées par les capacités pyroélectriques et donc lire le motif thermique détecté par le capteur 100.

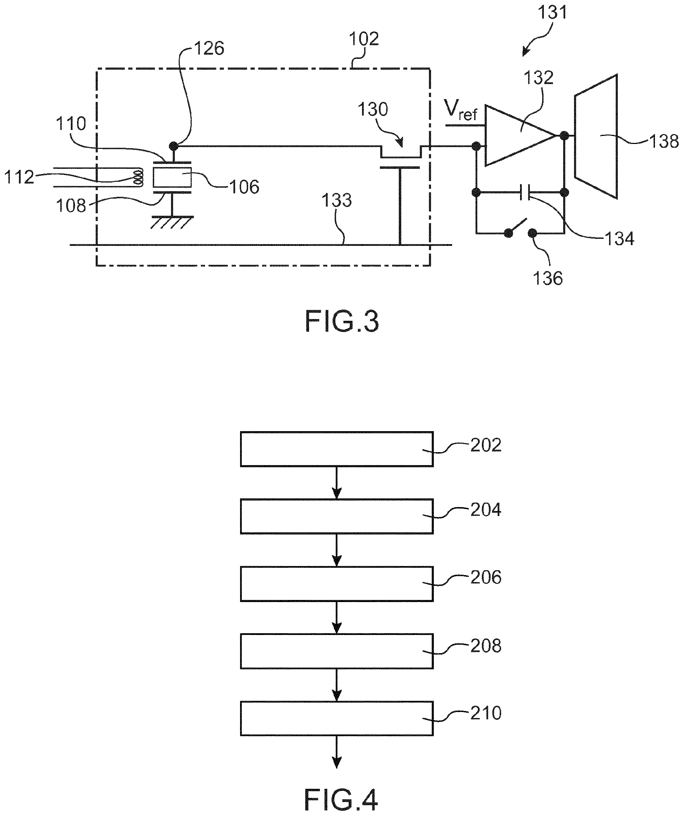

La figure 3 représente un premier exemple de réalisation de ces éléments électroniques permettant de lire la variation de charges électriques apparaissant dans la capacité pyroélectrique de l'un des pixels 102 du capteur 100.

Le pixel 102 représenté sur la figure 3 comporte une capacité pyroélectrique formée par la portion 106 de matériau pyroélectrique disposée entre les deux électrodes 108, 110. L'électrode inférieure 108 est reliée à la masse et l'électrode supérieure 110 forme une électrode de lecture du pixel 102 et est reliée à un noeud actif 126 du pixel 102.

Chaque pixel 102 comporte un transistor 130 de sélection de ligne. La grille du transistor 130 est reliée à une liaison électrique 133 commune à tous les transistors 130 d'une même ligne et sur laquelle un signal de sélection est destiné à être appliqué. Une première des électrodes de source et de drain du transistor 130 est reliée au noeud actif 126 et une deuxième des électrodes de source et de drain du transistor 130 est reliée à une entrée d'un circuit de lecture 131 se trouvant en pied de colonne. Cette entrée du circuit de lecture 131 correspond à l'entrée inverseuse d'un amplificateur de lecture 132 correspondant par exemple à un amplificateur opérationnel. Un potentiel électrique de polarisation $V_{ref}$ est appliqué sur l'entrée non inverseuse de l'amplificateur 132. La sortie de l'amplificateur 132 est rebouclée sur son entrée inverseuse par l'intermédiaire d'une capacité 134. Un interrupteur, ou commutateur, 136 est relié en parallèle à la capacité 134 et permet de court-circuiter la capacité 134. La sortie de l'amplificateur de lecture 132 est également reliée à l'entrée d'un convertisseur analogique/numérique 138. L'amplificateur de lecture 132, la capacité 134 et l'interrupteur 136 et le convertisseur analogique/numérique 138 sont communs à tous les pixels 102 d'une même colonne. Le convertisseur analogique/numérique 138 peut être commun à tous les pixels 102 du capteur 100, moyennant l'ajout d'éléments électroniques de multiplexage entre les sorties des amplificateurs de lecture 132 et le convertisseur numérique/analogique 138.

Lors d'une mesure du motif thermique présent sur le pixel 102 de la figure 3, le pixel 102 est tout d'abord réinitialisé en fermant l'interrupteur 136 (si celui-ci était précédemment en position ouverte) et en mettant à l'état passant le transistor 130. Le potentiel $V_{ref}$ se retrouve alors appliqué sur le noeud 126. Le chauffage du matériau pyroélectrique de la portion 106 débute en faisant passer un courant dans l'élément conducteur 112. La capacité pyroélectrique se trouve à ce moment à une température $T_0$.

L'interrupteur 136 est ensuite ouvert. L'intégration débute alors au niveau de la capacité pyroélectrique du pixel 102, pendant un temps d'attente $\zeta$. Des charges électriques sont générées par la capacité pyroélectrique du pixel 102 pendant ce temps d'attente $\zeta$. Du fait que l'interrupteur 136 est ouvert et que le transistor 130 est passant, les charges électriques générées par la capacité pyroélectrique du pixel 102 s'écoulent vers la capacité 134 associée au pixel 102. A l'issu de ce temps d'attente $\zeta$, la capacité pyroélectrique se trouve à la température $T_1$ et a donc été soumise à une

variation de température $\Delta T = T_1 - T_0$, les charges électriques générées par la capacité pyroélectrique et stockées dans la capacité 134 étant la conséquence de cette variation de température.

Le potentiel électrique en sortie de l'amplificateur 132 est donc $V_{out} = Q.C_{ref} + V_{ref}$, avec Q correspondant aux charges électriques générées et $C_{ref}$ la valeur de la capacité 134. Ce potentiel est alors lu et échantillonné par le convertisseur analogique / numérique 138. Lorsque l'opération de lecture et d'échantillonnage du résultat est achevée, l'interrupteur 136 est commuté en position fermée pour décharger la capacité 134 et le transistor 130 est mis à l'état bloqué pour isoler le pixel 106 et permettre la lecture d'un autre pixel de la colonne. Cette opération de lecture est mise en oeuvre simultanément pour tous les pixels 102 d'une même ligne.

On décrit maintenant, en liaison avec la figure 4, un procédé de capture d'un motif thermique correspondant ici à celui d'une empreinte digitale, dans lequel deux, ou plus de deux, mesures consécutives du motif thermique sont mises en oeuvre pour chaque pixel 102 du capteur 100, selon un premier mode de réalisation.

Dans ce premier mode de réalisation, deux temps d'attente différents sont utilisés pour réaliser deux mesures du motif thermique pour chaque pixel 102. Le même système de lecture, par exemple celui précédemment décrit en liaison avec la figure 3, est utilisé pour réaliser ces mesures pour chaque pixel 102.

A l'étape 202, un premier chauffage de l'élément de mesure thermosensible du pixel 102, c'est-à-dire de la capacité pyroélectrique du pixel 102, est réalisé en faisant circuler un premier courant dans l'élément conducteur 112. Ce premier chauffage permet de dissiper une première puissance de chauffage $P_1$ dans le pixel 102, ici égale à environ 1 mW.

Une première mesure du motif thermique de l'élément présent sur le pixel 102 est ensuite réalisée après un premier temps d'attente $\zeta_1$ ici égal à environ 50 $\mu$s (étape 204). Ce premier temps d'attente $\zeta_1$ correspond à la durée pendant laquelle les charges sont créées dans le pixel 102, ici entre l'instant auquel le premier chauffage est débuté et l'instant auquel la première lecture est réalisée. Pour le système de lecture précédemment décrit en liaison avec la figure 3, l'instant auquel la première lecture est réalisée correspond à l'instant auquel le potentiel de sortie de l'amplificateur 132 est lu.

L'information obtenue par cette première mesure au niveau de chacun des pixels 102 peut être qualifiée d'information « de surface ». En effet, avec ce premier temps d'attente $\zeta_1$ court, l'information obtenue permet de d'identifier, au niveau du pixel 102, si de l'air est présent ou si de la matière (peau ou résidu) est en contact avec le pixel 102.

La première image obtenue à partir des premières mesures mises en oeuvre pour tous les pixels 102 du capteur 100 permet de reproduire finement les détails du motif thermique du doigt et des résidus présents sur le capteur 100 car en utilisant un premier temps d'attente court, la diathermie entre les pixels 102, c'est-à-dire l'échange de chaleur entre pixels voisins, est minimale du fait que la chaleur n'a pas le temps de, ou peu de temps pour, se propager sur les côtés des pixels 102.

Les informations obtenues par cette première mesure du motif thermique de chaque pixel 102 sont ensuite complétées par une deuxième lecture des pixels réalisées avec un temps d'attente plus important. En effet, compte tenu du court temps d'attente $\zeta_1$ utilisé pour la première mesure du motif thermique, la première image obtenue présente plusieurs défauts :

- les gouttelettes d'eau et/ou de graisse laissées par exemple après la pose d'un doigt humide sur le capteur ou dues à la condensation autour d'un doigt humide peuvent être confondues avec de la peau en contact avec des pixels ;
- les parties les plus sèches du doigt peuvent produire un signal pouvant se confondre avec des résidus présents en surface du capteur 100.

Pour réaliser cette deuxième lecture, un deuxième chauffage de chacun des pixels 102 est réalisé en faisant circuler un deuxième courant dans l'élément conducteur 112 (étape 206). Dans ce premier mode de réalisation, la valeur de ce deuxième courant est sensiblement égale à celle du premier courant, dissipant ainsi dans le pixel 102 une deuxième puissance de chauffage $P_2$ sensiblement similaire à $P_1$, par exemple égale à environ 1 mW.

Une deuxième mesure du motif thermique de l'élément présent sur le pixel 102 est ensuite réalisée après un deuxième temps d'attente $\zeta_2$ différent du premier temps d'attente $\zeta_1$, ici tel que $\zeta_2 > \zeta_1$, et par exemple égal à environ 500 $\mu$s (étape 208).

Les deux chauffages sont ici mis en oeuvre de manière consécutive, sans interruption entre eux. Ainsi, en considérant un instant $T_0 = 0$ $\mu$s auquel le chauffage est commencé, la première lecture est alors réalisée à un instant $T_1 = 50$ $\mu$s. Le chauffage est poursuivi ensuite sans interruption puis la deuxième lecture est réalisée à un instant $T_2 = 500$ $\mu$s. La mise en oeuvre consécutive des différentes phases de chauffage permet de mettre à profit, pour la deuxième phase de chauffage, la durée correspondant au premier temps d'attente $\zeta_1$. Dans l'exemple ci-dessus, les instants $T_1$ et $T_2$ sont donc espacés l'un de l'autre d'une durée de 450 $\mu$s.

Les caractéristiques de cette deuxième image sont différentes de celles de la première image précédemment obtenue. En effet, en utilisant un temps d'attente plus important, la chaleur a le temps de se propager plus en profondeur dans la matière présente sur les pixels. Ainsi :

- les gouttelettes d'eau et/ou de graisse éventuellement présentes sur le capteur ont le temps d'absorber la chaleur et ne sont donc plus confondues avec la peau en contact avec le capteur, leur capacité thermique étant plus faible que celle de la peau ;
- la peau étant plus épaisse que les résidus éventuellement présents sur le capteur, elle peut être distinguée de ces résidus.

Par contre, la diathermie est plus importante lors de cette deuxième lecture que lors de la première lecture, ce qui donne une finesse de détails moins bonne que dans la première image.

En variante, les différents chauffages mis en oeuvre pour un pixel peuvent être réalisés de manière non consécutive, avec une phase d'interruption entre deux chauffages pendant laquelle aucun courant ne circule dans l'élément conducteur 112 (ou en stoppant l'éclairage des pixels 102 dans le cas d'un chauffage par rayonnement optique).

Dans ce cas, les durées d'attente des différentes mesures sont décorrélées de l'ordre dans lesquelles elles interviennent. Par exemple, en reprenant l'exemple précédemment décrit, il serait possible d'avoir dans ce cas $\zeta_2 < \zeta_1$, ce qui signifie que la première image correspondrait à une capture du motif thermique plus en profondeur que la deuxième image. La mise en oeuvre de deux chauffages de manière non consécutive peut être réalisée notamment lorsque les puissances $P_1$ et $P_2$ de ces deux chauffages sont différentes l'une de l'autre afin d'éviter que le bruit généré lors du changement de puissance ne fausse la deuxième mesure.

Selon une autre variante, il est possible de considérer, à la place de la deuxième image, la différence entre la deuxième image et la première image. Cette différence entre les deux images présente sensiblement les mêmes caractéristiques (un peu plus accentuée) que celle de la deuxième image. Ceci est particulièrement avantageux lorsque le circuit de lecture réalise une lecture en charges, comme c'est le cas sur l'exemple de la figure 3, où c'est cette différence d'image qui est acquise lorsque les deux chauffages sont mis en oeuvre consécutivement, sans interruption entre eux, du fait que la lecture de la première image par le circuit de lecture 131 peut entraîner une destruction des charges générées lors du premier chauffage.

Les deux images obtenues sont avantageusement comparables en termes de dynamique ou d'histogramme. Si ce n'est pas le cas, il est possible de modifier l'une des deux images afin de les rendre comparables, soit de manière statique par exemple via une calibration du capteur ou plus généralement en modifiant un paramètre de chaîne d'acquisition utilisée pour obtenir cette image, soit en maximisant la similarité entre les deux images ou entre les deux histogrammes des images par exemple via un logiciel de traitement d'image. Les éventuels défauts du capteur (FPN ou « Fixed Pattern Noise » ou bruit à motif fixe, PNRU ou « Pixel Response Non Uniformity » ou non-uniformité de réponse des pixels, etc.) peuvent être corrigés en amont de la combinaison des deux images ou après celle-ci car ces défauts sont identiques et présents dans les deux images.

Les deux images obtenues permettent l'obtention d'un plus grand nombre d'informations que lors d'une capture classique réalisée avec une seule image du motif thermique. Dans le cas d'une capture du motif thermique d'une empreinte digitale, les informations suivantes peuvent être obtenues :

- les pixels dits « froids » de la première image, c'est-à-dire ceux dont la température mesurée correspond aux plus faibles températures parmi toutes celles obtenues lors de la première mesure, et dont la température n'a pas beaucoup évolué dans la deuxième image sont considérés comme des pixels en contact avec de la peau, c'est-à-dire des pixels sur lesquels une crête de l'empreinte digitale est présente ;
- les pixels dits « tièdes » de la première image, c'est-à-dire ceux dont la température mesurée correspond à des températures moyennes parmi toutes celles obtenues lors de la première mesure, et dont la température a augmentée significativement dans la deuxième image sont considérés comme des pixels en contact avec des résidus ou des gouttelettes d'eau et/ou de graisse, mais non des pixels en contact avec de la peau ;

- les pixels dits « chauds » de la première image, c'est-à-dire ceux dont la température mesurée correspond aux plus fortes températures parmi toutes celles obtenues lors de la première mesure, et dont la température reste élevée dans la deuxième image sont considérés comme des pixels en contact avec de l'air, c'est-à-dire des pixels sur lesquels une vallée de l'empreinte digitale est présente ;
- les pixels dits « tièdes » de la première image et dont la température a diminuée dans la deuxième image sont considérés des pixels en contact avec de la peau sèche.

L'extraction de ces informations supplémentaires peut se faire en réalisant au préalable un traitement numérique des images obtenues (étape 210). Ce traitement numérique comprend au moins une comparaison et/ou une combinaison des première et deuxième images. En appelant la première image $I_1$ et la deuxième image $I_2$, ce traitement numérique peut consister à réaliser l'opération suivante : $\alpha.I_1 + (1 - \alpha).(I_1 - I_2)$, avec $\alpha \in ]0;1[$. Une combinaison linéaire des deux images est ainsi réalisée. D'autres combinaisons linéaires peuvent être envisagées. Les points identiques dans les deux images ne sont pas modifiés, et ceux qui diffèrent se voient attribués une valeur intermédiaire.

Une telle combinaison linéaire des deux images peut être réalisée par des éléments électroniques simples se trouvant en pied de colonnes de la matrice de pixels. Par exemple, le signal de la première image peut être échantillonné dans un premier échantillonneur, et le signal de la deuxième image peut être échantillonné dans un deuxième échantillonneur. Un additionneur appliquant les pondérations souhaitées entre les deux images peut ensuite combiner ces deux signaux avant l'entrée dans le convertisseur analogique/ numérique.

Cette combinaison linéaire peut également être réalisée par un composant logique programmable, par exemple de type CPLD ou FPGA, ayant une mémoire dont la capacité peut être limitée à la mémorisation de données issues d'une seule ligne de pixels. Cela permet de préserver une interface en sortie de ce composant qui soit comparable aux capteurs simples et de l'intégrer dans un système sans modification d'architecture ou de logiciel.

En variante, ce traitement numérique peut consister à calculer une nouvelle image correspondant à l'opération : $\max ((I_1+I_2)/2, I_2)$, c'est-à-dire la sélection, pour chaque pixel, du maximum parmi $(I_1+I_2)/2$ et $I_2$. Cette opération non linéaire permet de choisir, pour chaque pixel, l'information la plus claire de chaque image. Cela revient à insérer dans une image les pixels apparaissant plus sombre dans l'autre image. Autrement dit, en reprenant l'exemple précédemment décrit, cela revient à prendre la première image correspondant à une image de surface de l'empreinte capturée et à y ajouter les zones sèches de l'empreinte qui apparaissent plus sombres dans la deuxième image.

Avantageusement, il est possible de classifier des régions (c'est-à-dire des groupes de pixels) du motif thermique mesuré suivant leur contenu : doigt sec, trace ou résidu, doigt humide, vide, puis d'appliquer un deuxième traitement numérique approprié pour chaque région. Ce deuxième traitement numérique différent pour chaque type de région peut servir à la synthèse, ou la création, d'une nouvelle image. Ceci peut se faire en classifiant les pixels individuellement puis en filtrant le résultat obtenu (élimination des points isolés, etc.), et le traitement dans chaque région peut comporter une combinaison linéaire avec des poids adaptés entre les images et/ou une comparaison de ces images. Les règles suivantes peuvent par exemple être appliquées :

- Dans une zone de « doigt humide », les deux images apportent des informations comparables. Cependant, la seconde est plus floue, ou plus bruitée si elle a été traitée par un algorithme de déconvolution. Pour une telle zone, il est donc préférable d'utiliser les informations issues de la première image ou d'une combinaison linéaire des deux images dans laquelle le poids de la première image est plus important que celui de la deuxième image afin de préserver au mieux les détails apportés par la première image et limiter le bruit.
- Dans une zone de « doigt sec », la première image ne contient qu'une partie de l'information, et cette information est mieux restituée par la deuxième image. Pour une telle zone, il est donc préférable d'utiliser la deuxième image ou une combinaison linéaire des deux images dans laquelle le poids de la deuxième image est plus important que celui de la première image.

- Dans une zone de « trace » ou de « résidu », l'information de cette trace ou de ce résidu est plus importante dans la première image que dans la deuxième image. Il est donc préférable d'utiliser la deuxième image ou une combinaison linéaire des deux images dans laquelle le poids de la deuxième image est plus important que celui de la première image.
- Dans une zone « vide », aucunes des images ne contient d'information, ce vide étant déduit des pixels « chauds » dans les deux images. La moyenne des deux images peut par exemple être utilisée pour limiter le bruit aléatoire relatif à cette zone.

Optionnellement, des transitions lissées entre les régions peuvent permettre d'éviter des artefacts. En effet, à proximité des frontières entre les différentes régions, il est intéressant d'utiliser des moyennes entre les deux images afin de limiter les artefacts visibles lors d'un passage brutal d'une image à l'autre. Ainsi, en présence d'une frontière avec d'un côté des poids attribués aux deux images respectivement de 1 et 0 et de l'autre côté des poids respectivement de 0 et 1, il est judicieux de faire varier ces poids de manière progressive à proximité de la frontière, sur une bande de quelques pixels (par exemple 10 pixels). Pour cela, il est possible d'utiliser une fonction affine, ou une fonction cubique par exemple de type $(3x-x^3)/2$ ou encore une spline. Il est également possible de calculer des cartes de pondération des deux images et d'appliquer sur ces cartes un lissage.

Dans une autre configuration, la seconde image peut être utilisée pour définir les zones où le doigt est en contact avec le capteur et rejeter les zones où il n'y a que des traces. La première image peut alors être conservée dans les zones où il y a un doigt en contact, avec au besoin une augmentation de contraste par logiciel pour les parties du doigt les plus sèches. La seconde image sert dans ce cas à réaliser cette classification et l'information est uniquement extraite de la première image. Ainsi, il n'est pas nécessaire que la seconde image restitue des détails fins et peut être perturbée par une diathermie (et donc un flou) important sans impact sur l'image finale. Il est par exemple possible de filtrer la première image, par exemple par un filtre gaussien ou médian, puis de mettre en oeuvre une étape de traitement non linéaire réalisant par exemple un seuillage des valeurs extrêmes, ou toute autre transformation écrasant les valeurs les plus faibles et les plus fortes, et étirant les valeurs se trouvant entre les deux. Par exemple, dans le cas d'une image dans laquelle la valeur x de chaque pixel est codée sur 8 bits (entre 0 et 255) : si x < 50, alors x = 0 (élimination des valeurs les plus faibles) ; si x > 150, alors x = 255 (élimination des valeurs les plus fortes) ; si $50 \leq x \leq 150$, alors x = 2,55*(x-50) (étalement des valeurs des pixels initialement comprises entre 50 et 150 sur la gamme de valeurs 0 - 255. Il est également possible que la première image soit corrigée à partir de la deuxième image par exemple en les multipliant l'une avec l'autre. Par exemple, en appelant i1 les pixels de la première image et i2 les pixels de la deuxième image, une fonction du type (i1, i2) -> a+b.i1+c.i1.i2 peut être appliquée. Une autre correction possible est de réaliser dans la première image un filtre (médian ou gaussien) dont la taille de support varie en fonction de la deuxième image. Ainsi, les artefacts visibles dans la première image et non dans la deuxième images sont supprimés ou atténués.

De manière générale, l'étape de traitement numérique peut servir à créer, ou synthétiser, une nouvelle image à partir des première et deuxième images du motif thermique.

La diathermie plus importante dans la deuxième image peut se corriger par une déconvolution mise en oeuvre sur la deuxième image, préalablement au traitement numérique décrit ci-dessus. Pour cela, il est possible d'utiliser un filtre de Wienner avec une connaissance *a priori* de la PSF (« Point Spread Function », ou fonction d'étalement du point), ou des algorithmes itératifs, y compris des algorithmes sans *a priori* de la PSF puisque l'objectif est d'avoir la même PSF dans les deux images. Avoir la même PSF dans les deux images présente l'avantage de supprimer des différences au niveau des contours contrastés de l'image. La déconvolution permet d'obtenir une PSF similaire entre les deux images pour les rendre comparables.

Enfin, d'autres traitements numériques du domaine de l'acquisition d'empreinte digitale peuvent être appliqués sur l'image fusionnée, c'est-à-dire le résultat du traitement numérique réalisé à partir des deux images, afin d'améliorer son aspect visuel, comme par exemple :

- une normalisation de la dynamique (égalisation locale d'histogramme),
- une réduction de bruit,
- une accentuation des contours (ou une déconvolution),
- une segmentation de l'empreinte et une suppression du fond.

Dans ce premier mode de réalisation, les puissances dissipées $P_1$ et $P_2$ lors des deux phases de chauffage sont identiques, et par exemple égales à environ 1 mW. De plus, le premier temps d'attente $\zeta_1$ est par exemple égal à environ 50 μs et est inférieur au deuxième temps d'attente $\zeta_2$ qui est par exemple égal à environ 500 μs. Le rapport entre les deux temps d'attente $\zeta_1$ et $\zeta_2$ peut être compris entre environ 2 et 10.

Dans un deuxième mode de réalisation, les deux mesures du motif thermique par le capteur 100 peuvent être réalisées avec des temps d'attente $\zeta_1$ et $\zeta_2$ sensiblement identiques, et les deux phases de chauffages peuvent être réalisées avec des puissances injectées $P_1$ et $P_2$ de valeurs différentes, par exemple telles que $P_1 < P_2$. Cette différence de puissance est obtenue en changeant la valeur du courant injecté dans la résistance chauffante des pixels lors de la deuxième phase de chauffage par rapport à la première phase de chauffage, et donc en utilisant un potentiel de chauffage $V_{chauffe2}$ supérieur à $V_{chauffe1}$.

Le rapport entre les deux puissances $P_1$ et $P_2$ est avantageusement supérieur ou égal à 10. Par exemple, pour limiter la puissance instantanée (du fait qu'une ligne entière de pixels est chauffée dans un capteur tel que celui précédemment décrit en liaison avec la figure 2), la puissance $P_1$ peut être égale à environ 0,1 mW par pixel, et la puissance $P_2$ peut être égale à environ 1 mW par pixel. Un sélecteur de niveau du courant envoyé dans les éléments chauffants du capteur 100 peut permettre de réaliser ces deux mesures à des puissances différentes.

Les deux modes de réalisation précédemment décrits peuvent être combinés afin que les différentes mesures du motif thermique soient réalisées avec des temps d'attente différents et des puissances injectées différentes.

En outre, quel que soit le mode de réalisation, plus de deux chauffages et mesures du motif thermique peuvent être réalisés successivement pour un même pixel.

Par exemple, en utilisant un plus grand nombre de chauffages et de mesures pour chaque pixel, ce procédé peut réaliser une capture « couche par couche » du motif thermique capturé par le capteur.

Ce procédé peut être mis en oeuvre pour détecter que l'élément présent sur le capteur 100 lors de la capture du motif thermique est un vrai doigt, et non une reproduction d'une empreinte par exemple en silicone. Pour cela, il est possible de vérifier que plus on s'éloigne de la surface du capteur 100 (l'éloignement du capteur correspond à une mesure réalisée avec un temps d'attente plus important et/ou avec une puissance dissipée plus importante), plus la peau est hydratée et donc plus la capacité calorifique de l'élément présent sur le capteur augmente. Cette vérification peut consister à vérifier qu'au moins une partie des pixels ont leur température qui ne correspond plus à une certaine gamme de température prédéterminée. Si cette condition n'est pas vérifiée, il est possible d'en déduire que l'élément présent sur le capteur 100 est un faux doigt.

Dans le premier exemple de réalisation précédemment décrit en liaison avec la figure 3, les charges électriques générées dans chaque pixel 102 sont lues directement par l'amplificateur 132. Du fait que les éléments électroniques de lecture dans chaque pixel 102 ne correspondent qu'à un seul transistor 130, ce premier exemple de réalisation est bien adapté pour une réalisation du transistor 130 en technologie TFT, dont le coût de réalisation est faible. De plus, dans ce premier exemple de réalisation, le temps de lecture par l'amplificateur 132 est court, par exemple compris entre environ 1 et 10 $\mu$s, voire nul si le pixel 102 est connecté à l'amplificateur 132 pendant l'intégration comme c'est le cas dans l'exemple décrit précédemment. Enfin, en technologie TFT, le circuit comportant les pixels 102 est distinct de celui comportant les éléments 132, 134, 136 et 138, ces circuits étant assemblés ensuite par report l'un sur l'autre ou par d'autres solutions (« Chip on Flex », fils, etc.).

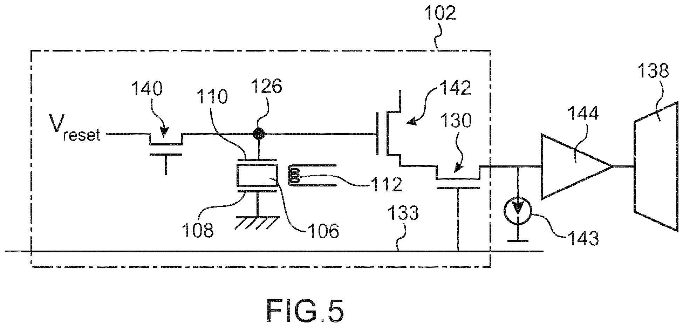

La figure 5 représente un deuxième exemple de réalisation des éléments électroniques permettant de lire en tension les mesures des pixels 102 du capteur 100.

Comme dans le premier exemple de réalisation, chaque pixel 102 comporte la capacité pyroélectrique reliée au noeud actif 126. Chaque pixel 102 est également pourvu d'un transistor de réinitialisation 140 dont l'une des électrodes de source et de drain est reliée au noeud 126 et dont l'autre des électrodes de source et de drain est soumise à l'application d'une tension de réinitialisation $V_{reset}$. Un signal de commande de réinitialisation du pixel 102 est appliqué sur la grille du transistor de réinitialisation 140. Cette réinitialisation permet de mettre le potentiel électrique du noeud 126 à une valeur connue (ici $V_{reset}$) au début de l'intégration, ainsi que de vider les charges de la capacité pyroélectrique une fois la lecture terminée. Comme pour la commande du transistor 130 de sélection de ligne de pixels, la commande du transistor de réinitialisation 140 peut être commune à toute une ligne de pixels 102.

Contrairement au premier exemple de réalisation dans lequel le noeud 126 est directement relié à une première des électrodes de source et de drain du transistor 130, le noeud 126 est ici relié à une grille d'un autre transistor 142 formant un suiveur de tension et réalisant une amplification du signal lu, c'est-à-dire du potentiel de l'électrode 110, évoluant avec les charges électriques générées par la capacité pyroélectrique du pixel 102. Un potentiel électrique d'alimentation est appliqué sur une première des électrodes de source et de drain du transistor 142 et une deuxième des électrodes de source et de drain du transistor 142 est reliée à la première des électrodes de source et de drain du transistor 130. Une deuxième des électrodes de source et de drain du transistor 130 est reliée à l'entrée du circuit de lecture 131 formé d'un amplificateur 144, inverseur ou non, de gain G. La sortie de l'amplificateur 144 est reliée à l'entrée du convertisseur analogique/numérique 138. Une source de courant 143 est également couplée à l'entrée de l'amplificateur 144 afin de polariser rapidement le transistor 142 dans une zone de fonctionnement où il se comporte en suiveur de tension.

Dans ce deuxième exemple de réalisation, la lecture d'un pixel 102 est réalisée par l'intermédiaire de trois transistors, par exemple de type MOS. La lecture se fait en tension et bénéficie de l'amplification locale réalisée par le transistor suiveur 142 qui bloque l'écoulement des charges sur le noeud actif 126. En technologie TFT, les transistors peuvent être par exemple réalisés à partir de polysilicium ou d'IGZO.

Ce deuxième exemple de réalisation réalise une lecture non destructive des charges générées par les capacités pyroélectriques. En effet, tant que le noeud actif 126 n'a pas subi de réinitialisation, les charges électriques générées sont conservées.

Dans le cas du deuxième exemple de réalisation représenté sur la figure 5, la tension de lecture résultante obtenue en sortie de l'amplificateur 144 dépend de la valeur de la capacité pyroélectrique additionnée des capacités parasites présentes sur le noeud actif 132, et est égale à $G(V_{reset} \pm \Delta Q/C_{pyro})$.

Lorsque les éléments électroniques de lecture correspondent au deuxième exemple de réalisation représenté sur la figure 5, la lecture d'un des pixels 102 du dispositif 100 peut être réalisée en mettant en oeuvre les étapes suivantes :

- réinitialisation de la capacité pyroélectrique via la mise à l'état passant du transistor de réinitialisation 140 ;
- mise à l'état bloqué du transistor 130 de sélection de ligne de pixels ;
- allumage du chauffage à la puissance $P_1$ ;
- mise à l'état bloqué du transistor de réinitialisation 140 ;
- début d'intégration du pixel 102 qui est alors à la température $T_0$ ;
- attente du premier temps d'attente $\zeta_1$, par exemple égale à environ 30 $\mu$s ;
- lecture du pixel 102 qui est alors à la température $T_1$, correspondant à la mise à l'état passant du transistor 130 qui permet de recopier la tension reçue sur la grille du transistor suiveur 142 vers l'amplificateur 144 et d'échantillonner la valeur obtenue après cette conversion ;
- réinitialisation du pixel en rendant passant le transistor de réinitialisation 140, le potentiel $V_{reset}$ étant appliqué sur le noeud 126 ;
- passage de la puissance de chauffage à $P_2$; le transistor de sélection de ligne 130 est toujours passant, la tension de la capacité pyroélectrique reste à $V_{reset}$ et les éventuelles charges induites par le changement de température sont éliminées ;
- mise à l'état bloqué du transistor de sélection ligne 130, ce qui isole la capacité pyroélectrique vis-à-vis du circuit de lecture ;
- mise à l'état bloqué du transistor de réinitialisation 140 ;
- attente du second temps d'attente $\zeta_2$, par exemple égal à environ 300 $\mu$s ;

- lecture des charges accumulées dans la capacité pyroélectrique qui est à la température $T_2$, via la mise à l'état passant du transistor 130, ce qui permet d'obtenir la variation de températures $\Delta T_2 = T_2 - T_1$ ;
- arrêt du chauffage.

Il est possible de réaliser plus de deux mesures à des temps d'attente et/ou des puissances différentes pour augmenter le nombre d'images du motif thermique à différentes profondeurs.

Quel que soit le mode de réalisation des éléments électroniques de lecture du capteur 100, les pixels 102 sont avantageusement lus ligne par ligne.

Bien que non représenté, le capteur 100 comporte un circuit de commande permettant d'appliquer les signaux de commande décrits ci-dessus pour piloter la lecture des pixels 102.

Bien que non représenté, le capteur 100 peut comporter en outre un circuit électronique de traitement apte à construire une image globale du motif thermique à partir des mesures réalisées au niveau de chacun des pixels 102. Ce circuit électronique de traitement peut également être apte à comparer cette image à plusieurs images stockées dans une base de données afin d'identifier si le motif thermique détecté correspond à l'un de ceux stockés dans la base de données. Le circuit électronique de traitement peut également être apte à afficher une image du motif thermique détecté.

En outre, le capteur 100 comporte avantageusement, en plus des éléments de détection thermique précédemment décrits, des éléments de détection optique ou capacitive permettant de détecter une image de l'élément dont le motif thermique est également détecté. Ainsi, le capteur 100 peut comporter une matrice de pixels de détection optique ou capacitive entrelacée avec les pixels de détection thermique dont le chauffage et la lecture sont pilotés comme décrit précédemment.

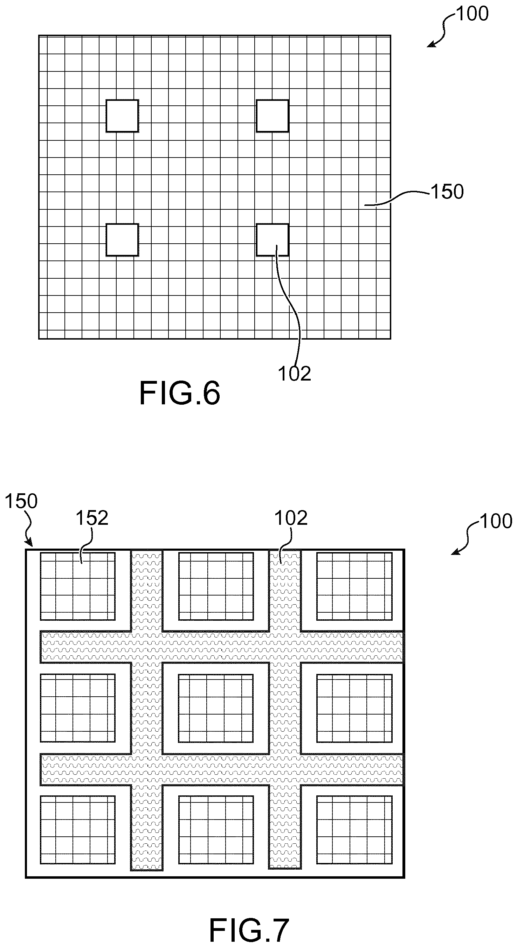

La figure 6 représente schématiquement une telle configuration dans laquelle le capteur 100 comporte une matrice de pixels de détection optique 150 dans laquelle sont régulièrement disposés un ou plusieurs pixels 102 de détection thermique.

Les dimensions des pixels 102 sont avantageusement supérieures à celles des pixels de détection optique de la matrice 150 car des dimensions importantes pour les pixels 102 permettent de réaliser plus facilement une lecture en profondeur du motif thermique à détecter et facilitent également la réalisation d'un motif de chauffage adapté pour l'élément conducteur 112, par exemple sous la forme d'un serpentin, d'un carré ou toutes autres formes bien adaptées au chauffage des pixels 102. La surface occupée par chaque pixel 102 est par exemple comprise entre environ 20 mm$^2$ et 1 mm$^2$.

Si le capteur 100 ne comporte pas des emplacements réservés aux pixels 102, les emplacements de certains pixels de la matrice 150 peuvent être réservés pour la réalisation des pixels 102. Un tel capteur 100 est avantageusement utilisé pour réaliser une détection optique du motif de l'élément présent sur le capteur 100 par la matrice 150, les pixels 102 réalisant une détection thermique permettant de détecter si l'élément présent sur le capteur 102 est composé de matière vivante. De manière avantageuse, plusieurs pixels 102 sont insérés dans la matrice 150 afin de réaliser plusieurs mesures thermiques à différents endroits du capteur 100, et éviter ainsi le risque que le capteur puisse être trompé en disposant de la matière vivante sur un ou plusieurs emplacements dédiés uniquement au contrôle de matière vivante et au niveau desquels seraient disposés les pixels 102.

Une autre variante de réalisation du capteur 100 incluant à la fois les pixels de détection thermique 102 et des pixels de détection optique peut consister à utiliser des pixels 102, réalisés sous la forme d'une matrice ou non, qui soient optiquement transparents, par exemple réalisés à partir d'un empilement ITO/PVDF/ITO, et disposés au-dessus des pixels de détection optique, par exemple au-dessus de la matrice 150. Cette variante a pour avantage de ne pas nécessiter d'emplacements de la matrice de détection optique qui soient réservés aux pixels de détection thermique 102.

Une autre variante de réalisation du capteur 100 est représentée sur la figure 7, incluant à la fois les pixels de détection thermique 102 et des pixels de détection optique 152 et dans lequel les pixels 102 sont réalisés tels qu'ils soient interposés entre les pixels 152. Sur l'exemple de la figure 7, le fait que les pixels 102 soient interposés entre les pixels 152 est obtenu grâce à la réalisation de chacun des pixels 102 en forme de grille : chaque colonne de la grille d'un pixel 102 séparant deux colonnes de pixels 152 et chaque ligne de la grille d'un pixel 102 séparant deux lignes de pixels 152. Les pixels 102 peuvent être disposés au-dessus des lignes métalliques et des colonnes de la matrice 150 de pixels 152. L'emplacement d'au moins un pixel 152 peut être utilisé pour placer le ou les transistors de commande d'un des pixels 102. Les contacts et les éléments électroniques de commande peuvent également être disposés en périphérie de la matrice 150. Cette configuration a pour avantage de permettre la réalisation d'éléments électroniques dédiés aux pixels 102 n'interférant pas avec ceux de la matrice 150. Chacun des pixels 102 est par exemple réalisé sous la forme d'une grille de dimensions égales à environ 400 x 400 $\mu$m, avec des lignes et des colonnes de largeur égale à environ 5 $\mu$m avec un pas d'environ 50 $\mu$m. Avec de telles dimensions, le capteur 100 comporte donc un faible nombre de pixels 102 rendant possible l'utilisation de temps de lecture importants. De plus, une telle configuration rend les problèmes de diathermie entre pixels 102 voisins négligeables du fait de la surface importante de ces pixels 102 par rapport à l'épaisseur de la ou des couches de protection recouvrant ces pixels 102. Pour de tels pixels 102, 152, les emplacements des pixels 152 peuvent être réalisés uniquement dans les couches perturbant la détection optique. Ainsi, le PVDF peut être déposé partout (et donc également au niveau des emplacements des pixels 152) et seules les électrodes des pixels 102 peuvent être réalisées selon le motif de grille

Le capteur 100 précédemment décrit comporte des capacités pyroélectriques formant les éléments de mesure thermosensibles du capteur. D'autres types d'éléments de mesure thermosensibles peuvent être utilisés, par exemple des thermistances (dont la valeur de la résistance électrique varie en fonction de la variation de température). Les thermistances peuvent avantageusement servir au chauffage par effet Joule de pixels. La lecture des thermistances peut dans ce cas être réalisée avec de courants de valeur importante et donc avoir une mesure de la valeur de la résistance électrique de ces thermistances qui soit plus précise. Dans ce cas, il n'est pas nécessaire de réinitialiser les pixels entres les première et deuxième mesures du motif thermique. Par contre, la valeur initiale de la résistance, au niveau de chaque pixel, est lue en début d'acquisition (par exemple en injectant un courant de valeur connue dans les thermistances et en mesurant la tension aux bornes des thermistances), afin de soustraire cette valeur initiale à la valeur lue à l'issue du temps d'attente de la mesure réalisée, et obtenir ainsi la variation de températures. La séquence du procédé peut dans ce cas être la suivante :

1 - allumage du chauffage à la puissance $P_1$ ;
2 - immédiatement après, lecture de la valeur du pixel qui est à la température $T_0$ ;
3 - attente du premier temps d'attente $\zeta_1$, par exemple égal à environ 30 $\mu$s ;
4 - lecture de la valeur du pixel qui est à la température $T_1$, ce qui permet d'obtenir la variation de température $\Delta T_1$ = $T_1$ - $T_0$ ;
5 - passage de la puissance de chauffage à $P_2$ ;
6 - attente du second temps d'attente $\zeta_2$, par exemple égal à environ 300 $\mu$s ;
7 - lecture de la valeur du pixel qui est à la température $T_2$, ce qui permet d'obtenir la variation de température $\Delta T_2$ = $T_2$ - $T_0$ ;
8 - extinction du chauffage.

Là encore, il est possible de réaliser plus deux mesures à des temps d'attente et/ou des puissances dissipées différentes.

Lorsque les éléments électroniques de lecture correspondent au deuxième exemple de réalisation représenté sur la figure 5, il est possible de réaliser les pixels 102 tels que le noeud actif 126 soit disposé près de la surface du capteur 102 sur laquelle le doigt est destiné à venir de poser. La présence de peau sur le capteur vient alors ajouter une capacité supplémentaire reliée au noeud actif 126 et qui provoque une amplification du signal obtenu.

La valeur de cette capacité supplémentaire peut être du même ordre de grandeur que celle de la capacité pyroélectrique, par exemple égale à environ 77 fF, et dépend de l'épaisseur et de la permittivité du matériau diélectrique de protection présent sur le capteur et qui forme le diélectrique de cette capacité supplémentaire.

Lorsque la peau n'est pas présente sur le pixel, la tension obtenue à la fin du temps d'attente est sensiblement similaire à celle qui serait obtenue avec un pixel qui ne comporterait pas cette capacité supplémentaire. Lorsque de la peau est présente sur le pixel, la tension obtenue est sensiblement divisée par 2 par rapport à celle qui serait obtenue sans cette capacité supplémentaire. L'écart obtenu entre les tensions en l'absence et en présence de peau sur le pixel est donc plus important. Cet effet d'amplification dépend de la capacité produite par la peau et une capacité supplémentaire de valeur importante est avantageusement recherchée afin de faciliter la lecture et augmenter le rapport signal à bruit dans le cas d'une lecture capacitive. La première image obtenue avec le faible temps d'attente $\zeta_1$ et/ou la faible puissance $P_1$ peut être vue comme correspondant à la distribution de ces capacités supplémentaires formées par les crêtes en contact avec certains pixels du capteur 100, du fait que ce faible temps d'attente et/ou cette faible puissance implique un faible échange de chaleur entre le capteur et le doigt. La seconde image obtenue bénéficie de l'écart plus important entre les tensions décrit ci-dessus, amplifiant ainsi l'image thermique obtenue. Un traitement numérique peut être appliqué sur les deux images afin d'obtenir uniquement les informations liées aux caractéristiques thermiques de la peau présente sur le capteur (ce traitement peut consister par exemple à diviser la seconde image par la capacité estimée à partir de la première image).

Le procédé de capture selon l'invention est appliqué pour réaliser une mesure de l'hydratation de la peau présente sur le capteur 100.

En effet, la couche superficielle de la peau, le stratum corneum, est constituée d'une couche de cellules mortes. Cette couche peut être plus ou moins hydratée, avec un taux d'hydratation pouvant aller de 100 % à 0 %. Lorsque son taux d'hydratation baisse, la peau va de moins en moins bien conduire la chaleur (baisse d'un facteur 10 de la conductivité thermique entre une peau avec un taux d'hydratation égal à 100 % et une peau avec un taux d'hydratation égal à 0 %), et également de moins en moins bien la stocker (baisse d'un facteur 2 de la chaleur volumique entre une peau avec un taux d'hydratation égal à 100 % et une peau avec un taux d'hydratation égal à 0 %).

Le tableau ci-dessous donne des valeurs des différentes caractéristiques thermiques de l'air, de l'eau, et de la peau avec différents taux d'hydratation :

| | Conductivité Thermique (W/m/K) | Chaleur Massique (J/kg/K) | Masse Volumique (kg/m³) | Chaleur Volumique (kJ/m3/K) |
|---|---|---|---|---|
| Air | 0,023 | 1006 | 1,2 | 1,2 |
| Peau 0 % | 0,060 | 1550 | 1300 | 2015 |
| Peau 10 % | 0,100 | 1770 | 1270 | 2247 |
| Peau 20 % | 0,150 | 2002 | 1240 | 2482 |
| Peau 30 % | 0,200 | 2244 | 1210 | 2710 |
| Peau 40 % | 0,250 | 2499 | 1180 | 2948 |
| Peau 50 % | 0,310 | 2767 | 1150 | 3182 |
| Peau 60 % | 0,370 | 3050 | 1120 | 3416 |
| Peau 70 % | 0,430 | 3348 | 1090 | 3649 |
| Peau 80 % | 0,490 | 3663 | 1060 | 3883 |
| Peau 90 % | 0,560 | 3997 | 1030 | 4117 |
| Peau 100 % | 0,630 | 4350 | 1000 | 4350 |
| Eau | 0,604 | 4185 | 1000 | 4185 |

Lorsque le procédé de capture précédemment décrit est mis en oeuvre pour une mesure d'empreinte digitale, les motifs thermiques mesurés sont ceux se trouvant jusqu'à quelques dizaines de microns en profondeur dans la peau. La peau est supposée homogène sur une telle distance, et cela reste superficiel.

Ainsi, en calibrant le capteur 100, par exemple en repérant le point d'hydratation maximal (100 %) en déposant un peu d'eau à la surface du capteur, l'air étant l'autre point extrême de cette calibration, les mesures de motif thermique réalisées peuvent alors servir à déterminer le taux d'hydratation de la peau du fait des différences entre les caractéristiques thermiques de la peau à différents taux d'hydratation. Il est possible de calculer au préalable un abaque, par exemple par simulation, ou de linéariser les mesures réalisées, afin que la simple lecture de la différence de mesure entre les crêtes et les vallées permet de donner le taux d'hydratation de la peau dont le motif thermique est capturé. Le taux d'hydratation peut également être calculé à partir d'un abaque ou d'une fonction exprimant le taux d'hydratation en fonction de la mesure obtenue lors d'une mesure du motif thermique pour un pixel sur lequel une crête a été identifiée.

Une détection de matière vivante, permettant de savoir si le motif thermique capturé correspond à celui d'un vrai doigt ou non, peut également être réalisée à partir du taux d'hydratation calculé.

Lorsque le procédé de capture du motif thermique comporte un plus grand nombre de phases de chauffage et de mesure du motif thermique, il est possible de calculer plusieurs taux d'hydratation à partir des différentes mesures réalisées, ce qui revient à calculer le taux d'hydratation pour différentes profondeur de peau.

Lorsque le capteur comporte également des éléments de détection optique permettant de détecter une image optique du doigt dont le motif thermique est également détecté, les informations relatives au taux d'hydratation et l'image optique peuvent être utilisées ensemble pour déterminer si le doigt dont le motif thermique est capturé est vrai ou non. En effet, un doigt dont l'image optique de l'empreinte digitale comporte des différences très marquées entre les crêtes et les vallées doit avoir un taux d'hydratation important car sinon, cela signifie que ce doigt n'est pas composé de matière vivante.

Dans les modes de réalisation et variantes précédemment décrits, l'intégration réalisée par chaque pixel 102 commence dès que le chauffage du pixel 102 est initié. Or, la chaleur met un certain temps avant de se propager dans le pixel de manière à obtenir une variation de température significative, cette variation de température correspondant à la donnée mesure lors de la capture du motif thermique. De plus, la chaleur met un certain temps pour traverser la protection de surface présente sur les pixels 102 du capteur 100. La traversée de cette protection par la chaleur n'apporte pas d'information thermique intéressante puisqu'elle est identique pour tous les pixels. Il est donc intéressant de ne pas débuter l'intégration lors de ce temps de propagation de la chaleur dans la couche de protection afin de ne récupérer que l'information thermique utile et ainsi limiter les problèmes de saturation. Cela peut être combiné avec la possibilité de combiner des pixels de détection thermique et des pixels de détection capacitive précédemment décrite.

Pour cela, il est possible de laisser un délai entre la mise en route du chauffage et le début de l'intégration des charges dans les pixels. Ce délai est par exemple compris entre environ 5 ms et 10 ms. Si ce délai est important, par exemple supérieur à environ 50 % du temps d'attente complet entre le début de chauffage et la lecture dans le cas d'une protection surfacique épaisse retardant le transfert de chaleur, il peut être avantageux de démarrer le chauffage pendant la lecture de la ligne de pixels précédente, en s'arrangeant pour ne pas provoquer de commutation indésirable.

Ce délai a en outre l'avantage d'éloigner l'instant où le chauffage se met en route de celui où la mesure commence, ce qui provoque sinon des appels de courant et donc du bruit à travers les alimentations.

En variante, ce délai peut être utilisé pour estimer les disparités entre les pixels résultants du processus de production du capteur (PRNU, « Photo Response Non Uniformity »), et ensuite corriger ces disparités. Par exemple, la protection surfacique peut être légèrement plus mince ou plus épaisse à certains endroits, ou abimée (présence de rayure) suite à une utilisation intensive au cours de la vie du capteur. Avantageusement, un filtrage temporel est ajouté pour limiter l'amplification du bruit. Une mesure préliminaire du motif thermique peut donc être réalisée en utilisant ce délai. Dans l'image obtenue par cette mesure préliminaire, les pixels ont tous chauffés de manière identique. Ainsi, les différences mesurées entre les pixels correspondent au « bruit fixe », ou FPN (« Fixed-Pattern Noise »), lié aux défauts du capteur. En supposant que le FPN est corrigé par ailleurs ou petit devant le PNRU, cette image peut donc permettre de connaître le PNRU et de le compenser sur les images suivantes.

Il est également possible de déterminer ce bruit fixe en capturant au préalable une image sans élément (doigt) présent sur le capteur.

Il est également possible de conserver dans une mémoire une image de ce PNRU, alimentée par de multiples acquisitions pour moyenner sa valeur et éliminer le bruit aléatoire. Par exemple, il est possible d'utiliser un filtre à réponse impulsionnelle infinie : si Im est l'image moyenne et I l'image nouvellement acquise, la mise à jour de l'image moyenne peut être réalisée telle que Im = (1-A).Im + A.I, A étant un paramètre permettant de régler la vitesse de réponse du filtre. Ici, la valeur du paramètre A est choisie petite, c'est-à-dire inférieure à environ 0,1 et par exemple de l'ordre de 0,01.

Le fait de ne pas conserver l'information thermique des premiers instants du chauffage dans l'image élimine une partie de l'information thermique liée à la protection surfacique, mais cela ne veut pas dire qu'il n'y a plus d'influence de cette protection sur la suite de la lecture. Il est donc avantageusement possible de combiner, avec des coefficients appropriés, cette image des premiers instants de chauffage avec l'image obtenue en ne prenant pas en compte ces premiers instants, afin de remonter à l'information intéressante, c'est-à-dire celle concernant uniquement le ou les éléments présents sur le capteur.

Dans tous les modes de réalisation précédemment décrits, la puissance de chauffage est avantageusement similaire durant les différentes phases de chauffage, seules les durées d'attente variant pour réaliser les différentes mesures du motif thermique à différentes profondeurs de l'élément dont le motif thermique est mesuré. En outre, la lecture des pixels 102 peut être avantageusement réalisée ligne de pixels par lignes de pixels, mais peut également être pixel par pixel, ou bien lu en une seule fois dans le cas d'un capteur à balayage.

**Revendications**

1. Procédé de capture d'un motif thermique correspondant à une empreinte digitale par un capteur (100) comportant plusieurs pixels (102) comprenant chacun au moins un élément de mesure thermosensible (106), le capteur (100) comprenant en outre au moins un élément chauffant (111) apte à chauffer l'élément de mesure thermosensible (106) de chacun desdits pixels (102) lors d'une mesure du motif thermique par l'élément de mesure thermosensible (106) dudit pixel (102), le procédé comportant au moins la mise en oeuvre des étapes suivantes pour chacun desdits pixels (102), en présence d'un doigt sur le capteur :

   - premier chauffage (202) de l'élément de mesure thermosensible (106) du pixel (102), dissipant une première puissance de chauffage dans l'élément de mesure thermosensible (106) du pixel (102) ;

- première mesure (204) du motif thermique présent sur le pixel (102), comprenant une première lecture d'au moins un paramètre variable avec la température de l'élément de mesure thermosensible (106) du pixel (102) après un premier temps d'attente ;
- deuxième chauffage (206) de l'élément de mesure thermosensible (106) du pixel (102), dissipant une deuxième puissance de chauffage dans l'élément de mesure thermosensible (106) du pixel (102) ;
- deuxième mesure (208) du motif thermique présent sur le pixel (102), comprenant une deuxième lecture du paramètre variable avec la température de l'élément de mesure thermosensible (106) du pixel (102) après un deuxième temps d'attente ;

dans lequel la valeur de la première puissance est différente de celle de la deuxième puissance et/ou la valeur du premier temps d'attente est différente de celle du deuxième temps d'attente, et comportant en outre, après la deuxième mesure du motif thermique présent sur chacun des pixels (102):

une étape de traitement numérique (210) de première et deuxième images du motif thermique, correspondant respectivement à l'ensemble des premières mesures du motif thermique et à l'ensemble des deuxièmes mesures du motif thermique, comprenant au moins une comparaison et/ou au moins une combinaison linéaire des première et deuxième images;
une étape d'identification de crêtes et de vallées de l'empreinte digitale à partir des données issues de l'étape de traitement numérique (210) des première et deuxième images du motif thermique ;
**caractérisé en ce qu'**il comprend, après l'étape d'identification des crêtes et des vallées de l'empreinte digitale :

- une étape de calcul d'un taux d'hydratation de la peau dont le motif thermique a été mesuré, à partir d'un abaque ou d'une fonction exprimant le taux d'hydratation en fonction du résultat obtenu lors d'une mesure du motif thermique pour un pixel sur lequel une crête a été identifiée, ou
- une étape de calcul d'une différence de mesures entre celle obtenue lors de la deuxième mesure du motif thermique pour un premier pixel (102) sur lequel une crête a été identifiée et celle obtenue lors de la deuxième mesure du motif thermique pour un deuxième pixel (102) sur lequel une vallée a été identifiée, puis une étape de calcul d'un taux d'hydratation de la peau dont le motif thermique a été mesuré, à partir d'un abaque ou d'une fonction exprimant le taux d'hydratation en fonction de la différence de mesures entre une crête et une vallée d'une empreinte digitale.

2. Procédé selon la revendication 1, dans lequel la valeur du premier temps d'attente est inférieure à celle du deuxième temps d'attente, et/ou dans lequel la valeur de la première puissance est inférieure à celle de la deuxième puissance.

3. Procédé selon l'une des revendications précédentes, dans lequel un rapport entre les premier et deuxième temps d'attente est compris entre environ 2 et 10, et/ou un rapport entre les première et deuxième puissances de chauffage est supérieur ou égal à 10.

4. Procédé selon l'une des revendications précédentes, dans lequel les premier et deuxième chauffages (202, 206) de l'élément de mesure thermosensible (106) du pixel (102) sont mis en oeuvre sous la forme d'une phase de chauffage continue à puissance constante.

5. Procédé selon l'une des revendications précédentes, comportant en outre, entre la deuxième mesure (208) du motif thermique présent sur chacun des pixels (102) et l'étape de traitement numérique (210) des première et deuxième images du motif thermique, une étape de déconvolution de la deuxième image.

6. Procédé selon l'une des revendications précédentes, comportant en outre, après l'étape de calcul du taux d'hydratation de la peau, une étape de classification de régions du motif thermique mesuré suivant la valeur calculée du taux d'hydratation pour les pixels desdites régions.

7. Procédé selon l'une des revendications précédentes, comportant le calcul de plusieurs taux d'hydratation à partir des différentes mesures réalisées.

8. Procédé selon l'une des revendications précédentes, dans lequel :

- chaque élément de mesure thermosensible comporte au moins une capacité pyroélectrique formée par au moins une portion de matériau pyroélectrique (106) disposée entre des première et deuxième électrodes (108, 110) ;

- l'élément chauffant (111) est apte à chauffer par effet Joule la portion de matériau pyroélectrique (106) de la capacité pyroélectrique dudit pixel (102) ;
- le premier chauffage (202) de l'élément de mesure thermosensible (106) d'un pixel (102) comprend une application d'une première tension de chauffage aux bornes de l'élément chauffant (111), dissipant la première puissance de chauffage par effet Joule dans la portion de matériau pyroélectrique (106) de la capacité pyroélectrique du pixel (102) ;
- la première mesure (204) du motif thermique présent sur un pixel (102) comprend une lecture des charges générées par le pixel (102) pendant le premier temps d'attente ;
- le deuxième chauffage (206) de l'élément de mesure thermosensible (106) d'un pixel (102) comprend une application d'une deuxième tension de chauffage aux bornes de l'élément chauffant (111), dissipant la deuxième puissance de chauffage par effet Joule dans la portion de matériau pyroélectrique (106) de la capacité pyroélectrique du pixel (102) ;
- la deuxième mesure (208) du motif thermique présent sur le pixel (102) comprend une lecture des charges générées par le pixel (102) pendant le deuxième temps d'attente.

**9.** Procédé selon l'une des revendications 1 à 7, dans lequel :

- chaque élément de mesure thermosensible comporte au moins une capacité pyroélectrique formée par au moins une portion de matériau pyroélectrique (106) disposée entre des première et deuxième électrodes (108, 110), et
- l'élément chauffant est apte à émettre un rayonnement lumineux destiné à chauffer les portions de matériau pyroélectrique (106) des capacités pyroélectriques des pixels (102).

**10.** Procédé selon la revendication 9, dans lequel le rayonnement lumineux émis par l'élément chauffant est orienté sur une couche de protection (109) des pixels (102) et/ou l'une des premières et deuxièmes électrodes (108, 110) des pixels (102).

**11.** Procédé selon l'une des revendications précédentes, dans lequel le capteur (100) comporte en outre des éléments de détection optique ou capacitive (150) entrelacés avec les pixels (102) comprenant les éléments de mesure thermosensible (106).

**12.** Procédé selon l'une des revendications précédentes, dans lequel un délai non nul sépare le début du premier chauffage (202) et le début du premier temps d'attente, et comportant en outre la mise en oeuvre d'une mesure préliminaire du motif thermique présent sur les pixels (102) via une lecture du paramètre variable avec la température des éléments de mesure thermosensible (106) des pixels (102) à la fin dudit délai, puis une estimation des disparités entre les pixels (102) du capteur (102) à partir de la mesure préliminaire du motif thermique.

**Patentansprüche**

**1.** Verfahren zur Erfassung eines Wärmemusters, das einem Fingerabdruck entspricht, durch einen Sensor (100), der mehrere Pixel (102) beinhaltet, jeweils mindestens ein wärmeempfindliches Messelement (106) umfassend, wobei der Sensor (100) ferner mindestens ein Heizelement (111) umfasst, das dazu geeignet ist, das wärmeempfindliche Messelement (106) von jedem der Pixel (102) bei einer Messung des Wärmemusters durch das wärmeempfindliche Messelement (106) des Pixels (102) zu erwärmen, wobei das Verfahren mindestens die Ausführung der folgenden Schritte für jedes der Pixel (102) beinhaltet, bei Vorhandensein eines Fingers auf dem Sensor:

- erste Erwärmung (202) des wärmeempfindlichen Messelements (106) des Pixels (102), eine erste Heizleistung in das wärmeempfindliche Messelement (106) des Pixels (102) ableitend;
- erste Messung (204) des Wärmemusters, das auf dem Pixel (102) vorhanden ist, eine erste Ablesung umfassend von mindestens einem variablen Parameter mit der Temperatur des wärmeempfindlichen Messelements (106) des Pixels (102), nach einer ersten Wartezeit;
- zweite Erwärmung (206) des wärmeempfindlichen Messelements (106) des Pixels (102), eine zweite Heizleistung in das wärmeempfindliche Messelement (106) des Pixels (102) ableitend;
- zweite Messung (208) des Wärmemusters, das auf dem Pixel (102) vorhanden ist, eine zweite Ablesung des variablen Parameters mit der Temperatur des wärmeempfindliche Messelements (106) des Pixels (102) umfassend, nach einer zweiten Wartezeit;

wobei sich der Wert der ersten Leistung von dem der zweiten Leistung unterscheidet und/oder sich der Wert der ersten Wartezeit von dem der zweiten Wartezeit unterscheidet, und ferner nach der zweiten Messung des Wärmemusters, das an jedem der Pixel (102) vorhanden ist, beinhaltend:

- einen Schritt der digitalen Verarbeitung (210) von ersten und zweiten Abbildungen des Wärmemusters, jeweils dem Satz der ersten Messungen des Wärmemusters und dem Satz der zweiten Messungen des Wärmemusters entsprechend, mindestens eine Gegenüberstellung und/oder mindestens eine Linearkombination der ersten und zweiten Abbildungen umfassend;
- einen Schritt der Identifizierung von Kämmen und Tälern des Fingerabdrucks, von den Daten ausgehend, die aus dem Schritt der digitalen Verarbeitung (210) der ersten und zweiten Abbildungen des Wärmemusters hervorgegangen sind;

**dadurch gekennzeichnet, dass** er umfasst, nach dem Schritt der Identifizierung der Kämme und Täler des Fingerabdrucks:

- einen Schritt der Berechnung eines Hydratationsgrades der Haut, dessen Wärmemuster gemessen wurde, ausgehend von einem Nomogramm oder einer Funktion, die den Hydratationsgrad in Abhängigkeit vom Ergebnis ausdrückt, das bei einer Messung des Wärmemusters für ein Pixel, auf dem ein Kamm identifiziert wurde, erhalten wurde, oder
- einen Schritt der Berechnung einer Differenz der Messungen zwischen der, die bei der zweiten Messung des Wärmemusters für ein erstes Pixel (102), auf dem ein Kamm identifiziert wurde, erhalten wurde, und der, die bei der zweiten Messung des Wärmemusters für ein zweites Pixel (102), auf dem ein Tal identifiziert wurde, erhalten wurde, und dann einen Schritt der Berechnung eines Hydratationsgrades der Haut, dessen Wärmemuster ausgehend von einem Nomogramm oder einer Funktion gemessen wurde, die den Hydratationsgrad in Abhängigkeit von der Messdifferenz zwischen einem Kamm und einem Tal eines Fingerabdrucks ausdrückt.

2. Verfahren nach Anspruch 1, wobei der Wert der ersten Wartezeit kleiner ist als jener der zweiten Wartezeit, und/oder wobei der Wert der ersten Leistung kleiner ist als jener der zweiten Leistung.

3. Verfahren nach einem der vorhergehenden Ansprüche, wobei ein Verhältnis zwischen der ersten und der zweiten Wartezeit zwischen etwa 2 und 10 liegt und/oder ein Verhältnis zwischen der ersten und der zweiten Heizleistung größer oder gleich 10 ist.

4. Verfahren nach einem der vorhergehenden Ansprüche, wobei die ersten und zweiten Erwärmungen (202, 206) des wärmeempfindlichen Messelements (106) des Pixels (102) in Form einer kontinuierlichen Heizphase mit konstanter Leistung ausgeführt sind.

5. Verfahren nach einem der vorhergehenden Ansprüche, das ferner zwischen der zweiten Messung (208) des Wärmemusters, das auf jedem der Pixel (102) vorhanden ist, und dem Schritt der digitalen Verarbeitung (210) der ersten und zweiten Abbildungen des Wärmemusters einen Schritt der Dekonvolution der zweiten Abbildung beinhaltet.

6. Verfahren nach einem der vorhergehenden Ansprüche, ferner beinhaltend, nach dem Schritt der Berechnung des Hydratationsgrades der Haut, einen Schritt der Klassifizierung von Regionen des gemessenen Wärmemusters gemäß dem berechneten Wert des Hydratationsgrades für die Pixel der Regionen.

7. Verfahren nach einem der vorhergehenden Ansprüche, die Berechnung mehrerer Hydratationsgrade beinhaltet, ausgehend von den verschiedenen durchgeführten Messungen.

8. Verfahren nach einem der vorhergehenden Ansprüche, wobei:

- jedes wärmeempfindliche Messelement mindestens eine pyroelektrische Kapazität beinhaltet, die durch mindestens einen pyroelektrischen Materialabschnitt (106) gebildet wird, der zwischen der ersten und der zweiten Elektrode (108, 110) angeordnet ist;
- das Heizelement (111) geeignet ist, den pyroelektrischen Materialabschnitt (106) der pyroelektrischen Kapazität des Pixels (102) durch Joule-Effekt zu erwärmen;
- die erste Erwärmung (202) des wärmeempfindlichen Messelements (106) eines Pixels (102) das Anlegen einer ersten Heizspannung an den Anschlüssen des Heizelements (111) umfasst, wobei die erste Heizleistung durch Joule-Effekt in den pyroelektrischen Materialabschnitt (106) der pyroelektrischen Kapazität des Pixels (102) abgeleitet wird;

- die erste Messung (204) des Wärmemusters, das auf einem Pixel (102) vorhanden ist, eine Ablesung der Belastungen umfasst, die vom Pixel (102) während der ersten Wartezeit erzeugt werden;

- die zweite Erwärmung (206) des wärmeempfindlichen Messelements (106) eines Pixels (102) ein Anlegen einer zweiten Heizspannung an den Anschlüssen des Heizelements (111) umfasst, wobei die zweite Heizleistung durch Joule-Effekt in den pyroelektrischen Materialabschnitt (106) der pyroelektrischen Kapazität des Pixels (102) abgeleitet wird;

- die zweite Messung (208) des Wärmemusters, das auf dem Pixel (102) vorhanden ist, eine Ablesung der Belastungen umfasst, die vom Pixel (102) während der zweiten Wartezeit erzeugt werden.

9. Verfahren nach einem der Ansprüche 1 bis 7, wobei:

- jedes wärmeempfindliche Messelement mindestens eine pyroelektrische Kapazität beinhaltet, die durch mindestens einen pyroelektrischen Materialabschnitt (106) gebildet wird, der zwischen der ersten und der zweiten Elektrode (108, 110) angeordnet ist, und

- das Heizelement geeignet ist, Lichtstrahlung zu emittieren, die dazu bestimmt ist, die pyroelektrischen Materialabschnitte (106) der pyroelektrischen Kapazitäten der Pixel (102) zu erwärmen.

10. Verfahren nach Anspruch 9, wobei die vom Heizelement emittierte Lichtstrahlung auf eine Schutzschicht (109) der Pixel (102) ausgerichtet ist, und/oder eine der ersten und zweiten Elektroden (108, 110) der Pixel (102).

11. Verfahren nach einem der vorhergehenden Ansprüche, wobei der Sensor (100) ferner optische oder kapazitive Erfassungselemente (150) beinhaltet, die mit den Pixeln (102), die die wärmeempfindlichen Messelemente (106) umfassen, verflochten sind.

12. Verfahren nach einem der vorhergehenden Ansprüche, wobei eine Verzögerung ungleich null den Beginn der ersten Erwärmung (202) und den Beginn der ersten Wartezeit trennt und ferner die Ausführung einer vorläufigen Messung des Wärmemusters, das an den Pixeln (102) vorhanden ist, beinhaltet, durch eine Ablesung des variablen Parameters mit der Temperatur der wärmeempfindlichen Messelemente (106) der Pixel (102) am Ende der Verzögerung, und dann eine Abschätzung der Unterschiede zwischen den Pixeln (102) des Sensors (102), ausgehend von der vorläufigen Messung des Wärmemusters.

**Claims**

1. Method for capturing a heat pattern corresponding to a fingerprint with a sensor (100) comprising several pixels (102) each including at least one heat-sensitive measuring element (106), the sensor (100) further including at least one heating element (111) capable of heating the heat-sensitive measuring element (106) of each of said pixels (102) during a measurement of the heat pattern by the heat-sensitive measuring element (106) of said pixel (102), the method including at least carrying out the following steps for each of said pixels (102), with a finger arranged on the sensor:

- a first step of heating (202) the heat-sensitive measuring element (106) of the pixel (102), in which a first amount of heating power is dissipated in the heat-sensitive measuring element (106) of the pixel (102);

- a first step of measuring (204) the heat pattern present on the pixel (102), including a first read-out of at least one temperature variable parameter of the heat-sensitive measuring element (106) of the pixel (102) after a first delay time;

- a second step of heating (206) the heat-sensitive measuring element (106) of the pixel (102), in which a second amount of heating power is dissipated in the heat-sensitive measuring element (106) of the pixel (102);

- a second step of measuring (208) the heat pattern present on the pixel (102), including a second read-out of the temperature variable parameter of the heat-sensitive measuring element (106) of the pixel (102) after a second delay time;

in which the value of the first power is different from that of the second power and/or the value of the first delay time is different from that of the second delay time, and further comprising, after the second step of measuring the heat pattern present on each of the pixels (102):

- a step of digital processing (210) of the first and second images of the heat pattern, corresponding respectively to all of the first measurements of the heat pattern and to all of the second measurements of the heat pattern, including at least one comparison and/or at least one linear combination of the first and second images;
- a step of identification of ridges and valleys of the fingerprint from the data coming from the step of digital processing (210) of the first and second images of the heat pattern;

**characterized in that** it comprises, after the step of identification of the ridges and valleys of the fingerprint:

- a step of calculation of a hydration level of the skin of which the heat pattern has been measured, from an abacus or a function expressing the level of hydration as a function of the result obtained during a measurement of the heat pattern for a pixel on which a ridge has been identified, or
- a step of calculation of a difference in measurements between that obtained during the second measurement of the heat pattern for a first pixel (102) on which a ridge has been identified and that obtained during the second measurement of the heat pattern for a second pixel (102) on which a valley has been identified, then a step of calculation of a hydration level of the skin of which the heat pattern has been measured, from an abacus or from a function expressing the level of hydration as a function of the difference in measurements between a ridge and a valley of a fingerprint.

2. Method according to claim 1, in which the value of the first delay time is less than that of the second delay time, and/or in which the value of the first power is less than that of the second power.

3. Method according to one of the preceding claims, in which a ratio between the first and second delay times is comprised between around 2 and 10, and/or a ratio between the first and second heating powers is greater than or equal to 10.

4. Method according to one of the preceding claims, in which the first and second steps of heating (202, 206) the heat-sensitive measuring element (106) of the pixel (102) are implemented in the form of a continuous heating phase at constant power.

5. Method according to one of the preceding claims, further comprising, between the second step of measuring (208) the heat pattern present on each of the pixels (102) and the step of digital processing (210) the first and second images of the heat pattern, a step of deconvolution of the second image.

6. Method according to one of previous claims, further comprising, after the step of calculation of the hydration level of the skin, a step of classification of regions of the measured heat pattern according to the calculated value of the hydration level for the pixels of said regions.

7. Method according to one of previous claims, comprising the calculation of several hydration levels from the different measurements made.

8. Method according to one of the preceding claims, in which:

- each heat-sensitive measuring element comprises at least one pyroelectric capacitance formed by at least one portion of pyroelectric material (106) arranged between the first and second electrodes (108, 110);
- the heating element (111) is capable of heating by Joule effect the portion of pyroelectric material (106) of the pyroelectric capacitance of said pixel (102);
- the first step of heating (202) the heat-sensitive measuring element (106) of a pixel (102) includes an application of a first heating voltage to the terminals of the heating element (111), dissipating the first heating power by Joule effect in the portion of pyroelectric material (106) of the pyroelectric capacitance of the pixel (102);
- the first measurement (204) of the heat pattern present on a pixel (102) includes a read-out of the charges generated by the pixel (102) during the first delay time;
- the second heating (206) of the heat-sensitive measuring element (106) of a pixel (102) includes an application of a second heating voltage to the terminals of the heating element (111), dissipating the second heating power by Joule effect in the portion of pyroelectric material (106) of the pyroelectric capacitance of the pixel (102);
- the second measurement (208) of the heat pattern present on the pixel (102) includes a read-out of the charges generated by the pixel (102) during the second delay time.

9. Method according to one of claims 1 to 7, in which:

- each heat-sensitive measuring element comprises at least one pyroelectric capacitance formed by at least one portion of pyroelectric material (106) arranged between the first and second electrodes (108, 110), and
- the heating element is capable of emitting a light radiation intended to heat the portions of pyroelectric material (106) of the pyroelectric capacitances of the pixels (102).

10. Method according to claim 9, in which the light radiation emitted by the heating element is oriented on a protective layer (109) of the pixels (102) and/or one of the first and second electrodes (108, 110) of the pixels (102).

11. Method according to one of the preceding claims, in which the sensor (100) further comprises optical or capacitive detection elements (150) interlaced with the pixels (102) including the heat-sensitive measuring elements (106).

12. Method according to one of the preceding claims, in which a non-zero delay separates the start of the first step of heating (202) and the start of the first delay time, and further comprising the implementation of a preliminary measurement of the heat pattern present on the pixels (102) via a read-out of the temperature variable parameter of the heat-sensitive measuring elements (106) of the pixels (102) at the end of said delay, then an estimation of the disparities between the pixels (102) of the sensor (102) from the preliminary measurement of the heat pattern.

FIG.1

FIG.2

FIG.3

FIG.4

FIG.5

100

150

102

FIG.6

150

152

102

100

FIG.7

## RÉFÉRENCES CITÉES DANS LA DESCRIPTION

**Documents brevets cités dans la description**

- US 4394773 A
- US 4429413 A
- US 6289114 B
- US 6091837 A
- EP 2385486 A1